# EUROPÄISCHE PATENTSCHRIFT

(11) **EP 2 929 098 B1**
(45) Veröffentlichungstag und Bekanntmachung des Hinweises auf die Patenterteilung: **21.08.2019**
(21) Anmeldenummer: 13799280.6
(22) Anmeldetag: 29.11.2013
(51) Int. Cl.: F16F 7/116, E04H 12/08, E04H 12/12, E04H 12/16, F03D 80/80, E04B 1/98

(54) **SCHWINGUNGSBEGRENZUNGS-MODUL SOWIE VORRICHTUNG, BAUSEGMENT FÜR EINE BAUEINRICHTUNG UND WINDENERGIEANLAGE MIT EINEM SCHWINGUNGSBEGRENZUNGS-MODUL**
VIBRATION-LIMITING MODULE AND DEVICE, STRUCTURAL SEGMENT FOR A STRUCTURAL INSTALLATION, AND WIND TURBINE HAVING A VIBRATION-LIMITING MODULE
MODULE ET DISPOSITIF DE LIMITATION DES VIBRATIONS, SEGMENT DE CONSTRUCTION POUR UN DISPOSITIF DE CONSTRUCTION ET ÉOLIENNE ÉQUIPÉE D'UN MODULE DE LIMITATION DES VIBRATIONS

(30) Priorität: 04.12.2012 DE 102012222191
(43) Veröffentlichungstag der Anmeldung: 14.10.2015
(73) Patentinhaber: Wobben Properties GmbH, 26607 Aurich (DE)
(72) Erfinder: KÖNITZ, Malte, 26434 Hohenkirchen (DE); KRAFT, Martin, 26605 Aurich (DE)
(74) Vertreter: Eisenführ Speiser
(86) Internationale Anmeldenummer: PCT/EP2013/075151
(87) Internationale Veröffentlichungsnummer: WO 2014/086686

(56) Entgegenhaltungen:
- EP-A1- 1 479 938
- EP-B1- 1 008 747
- DE-A1-102008 050 989
- DE-U1-202005 019 949
- JP-A- S6 353 330
- JP-A- H05 187 481
- SU-A2- 1 208 371

## Beschreibung

Die Erfindung betrifft ein Schwingungsbegrenzungs-Modul nach dem Oberbegriff des Anspruchs 1. Die Erfindung betrifft weiter eine Vorrichtung mit einem solchen Schwingungsbegrenzungs-Modul sowie ein Bausegment für eine Baueinrichtung mit einem solchen Schwingungsbegrenzungs-Modul sowie eine Windenergieanlage mit einem Turm und einem Turmsegment mit einem solchen Schwingungsbegrenzungs-Modul.

Eine Windenergieanlage (WEA) stellt aufgrund ihrer hohen und dabei schlanken Bauform eine besonders schwingungsanfällige Konstruktion dar; dies gilt insbesondere für Stahlrohr- und Spannbetontürme von Windenergieanlagen, die in zunehmendem Maße für größere Nabenhöhen eines Rotors ausgelegt sind, was eine Störschwingungsanfälligkeit erhöht. Insbesondere können Resonanzerscheinungen eines drehenden Rotors mit gegebenenfalls schwingenden Rotorblättern zu komplexen Schwingungsformen einer Windenergieanlage führen, insbesondere auch am Turm derselben. Gleichwohl ist eine Ressourcen sparende Konstruktion eines Turms der Windenergieanlage, z. B. im Hinblick auf eine Reduzierung vom Turmdurchmesser und Wandstärke desselben von zunehmender Wichtigkeit. Grundsätzlich gilt dies für jede Art einer Bauform einer Windenergieanlage, insbesondere aber für eine Windenergieanlage mit einem Rohrturm, wie beispielsweise einem Stahlrohrturm oder einem Fertigteil-Betonturm.

Eine Windenergieanlage bekannter Bauform weist eine auf einem Turm angebrachte, einen Rotor tragende Gondel auf. Es ist bekannt, im Turm einen Schwingungstilger anzubringen. Beispielsweise beschreibt EP 1 008 747 B1 einen Schwingungstilger zur Dämpfung von Schwingungen in einer Windenergieanlage mit einer Schwungmasse, einer Pendelstange, einem Pendellager- bzw. -gelenk sowie Dämpfungsmitteln. Die Tilgungseigenschaft wird dadurch erreicht, dass die Schwungmasse im Vergleich zum Bauwerk der Windenergieanlage phasenverschoben schwingt. Die Dämpfungsmittel sind zusammen mit dem Pendelgelenk als bauliche Einheit gebildet und bestehen im Wesentlichen aus einem oder mehreren Elastomer-Modulen, wobei der Tilger in beliebige Richtungen einer Ebene beschleunigt werden kann.

Grundsätzlich ist unter einem Schwingungstilger ein Baumodul zu verstehen, welches aus einer Masse und mindestens einer Feder besteht und durch eine Anbindung an ein schwingungsfähiges System, wie z. B. eine Windenergieanlage, dessen Schwingungen reduzieren kann. Die auch als Gegenschwingmasse bezeichnete Masse des Schwingungstilgers schwingt insbesondere phasenverschoben zur Hauptstruktur der Baueinrichtung wie beispielsweise eine Windenergieanlage. Die aus der Beschleunigung entstehenden Kräfte des Schwingungstilgers können in die zu beruhigende Hauptstruktur einer Windenergieanlage eingeleitet werden. Die Wirkung eines Schwingungstilgers beschränkt sich nicht nur auf den Angriffspunkt der Tilgungserregung sondern wirkt auch für andere Punkte der angeschlossenen Hauptstruktur. Grundsätzlich ist ein Schwingungstilger für eine vergleichsweise eng begrenzte Schwingungs-Störfrequenz einsetzbar, da regelmäßig eine nur begrenzt veränderliche Schwingungs-Tilgungsfrequenz des Schwingungstilgers zur Verfügung steht; ein Schwingungstilger gilt somit als eher statische Komponente zur Schwingungsreduzierung. Ein wesentlicher Vorteil eines Schwingungstilgers besteht aber darin, dass er vergleichsweise gut auf die zu tilgende Störschwingung ausgelegt ist und diese bei geeigneter Auslegung praktisch vollständig löschen kann. Zu berücksichtigen ist, dass für das gekoppelte System des Schwingungstilgers und der störschwingungsfähigen Hauptstruktur, z. B. der Windenergieanlage, bei Tilgung eine Frequenzaufspaltung zu beobachten ist, die außerhalb der Tilgerfrequenz bzw. der ursprünglichen Schwingungs-Störfrequenz liegt und gegebenenfalls zu höheren Schwingungsamplituden außerhalb der Tilgerfrequenz führen kann.

Ein Schwingungsdämpfer ist im Unterschied zum Schwingungstilger, gleichwohl in Ergänzung zum Schwingungstilger einsetzbar, als ein System anzusehen, das die Gegenschwingmasse mittels einer Feder und eines Dämpferelementes an die zu bedämpfende Hauptstruktur anschließt. Hierbei können die Feder- und Dämpferelemente auf unterschiedliche Weise ausgeführt werden. Schwingungsdämpfer werden grundsätzlich als dynamisch wirkende Systeme angesehen und können, im Vergleich zu einem reinen Schwingungstilger, bei einem breiteren Spektrum von verschiedenen Störfrequenzen arbeiten.

Insofern ist die in EP 1 008 747 B1 bezeichnete Struktur eines Schwingungstilgers eher als ein Schwingungsdämpfer zu bezeichnen. Das System ist als solches als ein passiv wirkendes System zu bezeichnen.

Passiv wirkende Konzepte zur Schwingungsreduzierung nutzen gedämpfte oder ungedämpfte Strukturen an einer störschwingenden Hauptstruktur, die ein mechanisch funktionierendes Feder-Masse-System aufweisen. Der Einsatz eines passiven Schwingungstilgers eignet sich z. B. insbesondere für den Fall, dass die Frequenz einer Störschwingung vergleichsweise gut bekannt und in einem vergleichsweise eng begrenz ten undbekannten Frequenzbereich liegt. Unabhängig davon kann ein passives System durch eine Erweiterung mit einem aktiven Stellglied versehen werden und so zu einem aktiven System ausgebaut werden; dies indem beispielsweise signifikante Parameter einer Hauptstruktur bzw. insbesondere des Schwingungstilgers oder -dämpfers in Echtzeit auf veränderliche Bedingungen der Hauptstruktur eingestellt werden. Dadurch können auch neben einer vornehmlichen Resonanzfrequenz einer Hauptstörfrequenz liegende andere Störfrequenzen vergleichsweise breitbandig getilgt und/oder gedämpft werden. Dieser Ansatz macht allerdings in den meisten Fällen eine aufwendige Regelungstechnik sowie eine externe Energiezufuhr erforderlich.

Ein auf unterschiedliche Störfrequenzen variabel aber fest einstellbares Schwingungstilgersystem mit variabler Tilgereigenfrequenz ist aus DE 20 2005 019 949 U1 bekannt. Darin ist ein als Stehpendel ausgebildetes Tilgersystem mit einer Tilgermasse über einer Federanordnung an einer Basis abgestützt und ein Grundabstand des Schwerpunkts der Tilgermasse lässt sich variieren. Parallel zu der Federanordnung zwischen der Tilgermasse und der Basis ist ein druck- und/oder zugfestes Abstandsdefinitionselement vorgesehen, dessen Länge variierbar ist. Grundsätzlich sind solche oder andere stehende Tilgervorrichtungen bevorzugt zur Gebäudedämpfung einsetzbar. Eine vergleichsweise komplexe Schwingungsreduzierung bei einem Gebäude ist basierend auf einem Stehpendel in DE 197 34 993 A1 beschrieben.

Wünschenswert ist es, zum Schutz von schwingungsanfälligen Baueinrichtungen eine vergleichsweise effektiv arbeitende Schwingungsbegrenzung, insbesondere mittels einer geeigneten Amplitudenreduzierung einer Störschwingungsform, insbesondere vornehmlich mittels Schwingungstilgung, zur Verfügung zu stellen, die gleichwohl sicher ausgelegt ist und darüber hinaus vergleichsweise einfach aufgebaut und/oder handhabbar zur Verfügung gestellt werden kann.

Das Deutsche Patent- und Markenamt hat in der Prioritätsanmeldung zu der vorliegenden Anmeldung folgenden Stand der Technik recherchiert: DE 20 2005 019 949 U1, US 6 672 763 B1, EP 1 008 747 B1 sowie DE 197 34 993 A1 Den nächsten Stand der Technik formt die JPH05187481.

An dieser Stelle setzt die Erfindung an, deren Aufgabe es ist, eine Vorrichtung anzugeben, die zur hängenden Anbringung an einer Baueinrichtung ausgebildet ist und die in verbesserter Weise ausgebildet ist, eine Störschwingung der Baueinrichtung zu begrenzen, insbesondere eine Störschwingung zu tilgen. Insbesondere soll die Vorrichtung eine Schwingungsbegrenzung, vorzugsweise Schwingungstilgung, vergleichsweise effektiv und sicher auch bei Aktivsystemen zur Verfügung stellen können. Dennoch soll eine Vorrichtung vergleichsweise einfach und dennoch verlässlich und sicher ausgelegt sein.

Insbesondere soll eine Vorrichtung für eine Resonanzerscheinung einer höheren Eigenfrequenz als die erste Eigenfrequenz einer Windenergieanlage, insbesondere eines Turms der Windenergieanlage ausgelegt sein. Solche höheren Eigenfrequenzen, die im Vergleich insbesondere zur ersten Eigenfrequenz, im Wesentlichen einer Schwingungsform mit einem Bauch im Turmbereich zugeordnet sind, werden durch Gondelbewegungen und insbesondere durch ein Nickmoment der Gondel erzeugt. Zusätzlich können auch ein Rotor und insbesondere eine Rotorbewegung vergleichsweise komplexe Beiträge zur Schwingungsform liefern, die nicht vernachlässigbar sind. Dies kann zu Schwingungsformen führen, welche zwar ein offenes Ende im Bereich der Gondel aufweisen, jedoch mit einem Knotenpunkt und einem Bauch der Schwingungsform im Turmbereich. Es zeigt sich, dass insbesondere eine zweite Eigenfrequenz einen Bauch aufweisen kann, der nicht im Bereich der Gondel oder direkt unter der Gondel einer Windenergieanlage liegt, sondern deutlich darunter liegen kann.

Aufgabe der Erfindung ist es, insbesondere ein Schwingungstilger-Modul, eine schwingungstilgende Vorrichtung sowie ein Bausegment für eine Baueinrichtung und eine Baueinrichtung, insbesondere eine Windenergieanlage anzugeben, welche in verbesserter Weise zur Tilgung und/oder Dämpfung einer Schwingung aktiv und/oder passiv ausgebildet ist.

Die Aufgabe betreffend die Vorrichtung wird durch die Erfindung mit einem Schwingungsbegrenzungs-Modul der eingangs genannten Art gelöst, bei dem erfindungsgemäß auch die Merkmale des kennzeichnenden Teils des Anspruchs 1 vorgesehen sind.

Das Modul ist insbesondere zur hängenden Anbringung an einer Baueinrichtung ausgebildet und in Form eines Schwingungstilger-Moduls gebildet.

Erfindungsgemäß weist das Schwingungsbegrenzungs-Modul auf:
- ein Tragwerk
- ein Pendelsystem mit einer Pendelmasse und mit einem Aufhängungssystem zur Aufhängung der Pendelmasse an dem Tragwerk, wobei das Aufhängungssystem eine in Richtung einer Hängeachse verlaufende Pendelmassenaufhängung aufweist, die über einen Aufhängungskopf an dem Tragwerk befestigt ist.

Erfindungsgemäß ist darüber hinaus vorgesehen, dass
- das Aufhängungssystem eine Anzahl von in Richtung einer Hängeachse verlaufende Pendelfederelemente aufweist, und
- der Aufhängungskopf der Pendelmassenaufhängung einen Gelenkkopf aufweist, der an dem Tragwerk befestigt ist und der ein als Gleitlager ausgebildetes Pendellager aufweist.

Insbesondere ist wenigstens ein Pendelfederelement der Anzahl von Pendelfederelementen in Richtung der Hängeachse an der Pendelmasse und dem Tragwerk befestigt.

Das Konzept der Erfindung kombiniert zwei Ansätze, nämlich, vereinfacht gesagt, erstens ein vergleichsweise einfach ausgelegtes aber zur Schwingungstilgung effizient wirkendes Pendellager, das als ein Gleitlager ausgebildet ist sowie zum zweitens eine Ausrichtung von Pendelfederelementen in Richtung der Hängeachse: also parallel zur Pendelmassenaufhängung.

Der vorgenannte zweite Aspekt der erfindungsgemäßen Konzeptionierung des Schwingungsbegrenzungs-Moduls sieht mit den in Richtung der Hängeachse verlaufenden Pendelfederelementen zwischen Pendelmasse und Tragwerk --auch als vertikale Richtung bezeichnet-- im Grundsatz die Voraussetzung für eine elastische Federung der Pendelmasse vor, die variabel einstellbar gestaltbar ist.

Darüberhinaus hat es sich im Rahmen einer Weiterbildung besonders bewährt, das Pendellager dämpfungsfrei auszubilden, d. h. die Pendelmassenaufhängung für eine Pendel-Bewegung der Pendelmasse auszubilden. Insbesondere hat sich als vorteilhaft erwiesen, dass die Pendelmassenaufhängung längen- und/oder richtungsunveränderlich ist; dies ist weiter einer vereinfachten und dennoch sicheren und damit nachhaltig und langzeitbeständigen Pendellagerauslegung zuträglich.

Das Konzept der Erfindung führt auch auf eine schwingungsbegrenzende, insbesondere schwingungstilgende, Vorrichtung des Anspruchs 23, die erfindungsgemäß zur hängenden Anbringung des Schwingungstilger-Moduls an einer Baurichtung ausgebildet ist.

Insbesondere hat es sich bewährt, eine Anzahl von Schwingungsbegrenzungs-Modulen, insbesondere Schwingungstilger-Modulen, vorzusehen. Dies kann einer Richtungsvariabilität als auch vergleichsweise breitbandigen Schwingungstilgung, vorzugsweise für eine höhere Eigenfrequenz einer Baueinrichtung wie einer Windenergieanlage, insbesondere eines Turms bzw. eines Turms einer Windenergieanlage zuträglich sein.

Das Konzept der Erfindung führt auch auf ein Bausegment des Anspruch 14 für eine Baueinrichtung mit einer schwingungsbegrenzenden, insbesondere schwingungstilgenden, Vorrichtung mit einem, insbesondere einer Anzahl von, Schwingungsbegrenzungs-Modulen. Insbesondere ist im Rahmen einer Weiterbildung vorgesehen, dass das Bausegment als ein Turmsegment für eine Windenergieanlage ausgebildet ist und ein Schwingungsbegrenzungs-Modul der vorgenannten Art aufweist.

Das Konzept der Erfindung führt auch auf eine Windenergieanlage mit einem Turm und einer auf dem Turm angebrachten, einen Rotor tragenden Gondel, wobei der Turm ein Turmsegment aufweist mit einer schwingungsbegrenzenden Vorrichtung der vorgenannten Art, insbesondere eine Windenergieanlage des Anspruchs 15.

Bei einer Windenergieanlage der vorgenannten Art ist in der Gondel ein Generator mit einer Welle verbunden, wobei die Welle über eine Anzahl von mit der Welle über eine Nabe verbundenen Rotorblättern eines Rotors antreibbar ist. Dabei ist ein Rotorblatt über ein Blattlager mit einem Nabenadapter der Nabe verbunden. Auf diese Weise kann eine Windenergie in eine drehende Bewegung der Welle und zum Antrieb des Generators genutzt werden; in der Gondel sind eine Reihe von Stromrichtermodulen vorgesehen, welche ausgebildet sind, den vom Generator unmittelbar gelieferten Strom auf eine Netzfrequenz zu bringen.

Insbesondere hat die Erfindung erkannt, dass sich ein vorgenanntes Turmsegment zum Einbau bei etwa 2/3 der Höhe eine Turms der Windenergieanlage, insbesondere in einem Bereich zwischen 2/3 minus 20 % bis 2/3 plus 20 % der Höhe des Turms der Windenergieanlage besonders vorteilhaft eignet, um besonders effektiv eine zweite Eigenfrequenz einer ggfs. resonanten Störschwingung der Windenergieanlage, insbesondere des Turms der Windenergieanlage zu tilgen.

Die Erfindung geht von der Überlegung aus, dass sich als Basis für eine vergleichsweise einfache nachhaltige und dennoch sichere Störschwingungsreduzierung vor allem ein Schwingungstilger-Modul eignet, das jedoch zu einem geeigneten Schwingung reduzierendenden Modul ausbaubar ist; ein Schwingungstilger-Modul ist zunächst vorteilhaft passiv und mit vergleichsweise geringem Aufwand und dennoch hoher Effektivität realisierbar. Die Erfindung hat erkannt, dass viele Baueinrichtungen, insbesondere eine Windenergieanlage ein auch für komplexe resonante Störschwingungen anfälliges schwingungsfähiges System darstellen. Gleichwohl sind Eigenfrequenzen in vergleichsweise gut eingrenzbarem Maße zu identifizieren; insbesondere auch höhere Eigenfrequenzen lassen sich für eine definierte Baueinrichtung, insbesondere eine Windenergieanlage, vergleichsweise gut definieren. Es wurde erkannt, dass ein Schwingungstilger-Modul in besonders einfache und effiziente Weise auf ein bekanntes Eigenfrequenzspektrum von Störfrequenzen einer Baueinrichtung, insbesondere einer Windenergieanlage, ausgelegt werden kann.

Die Erfindung geht, knapp ausgedrückt, aus von einem Pendelsystem, insbesondere von einem Pendeltilger, mit einer Pendelmasse und einem Aufhängungssystem mit einer Pendelmassenaufhängung. Erfindungsgemäß ist beim Aufhängungssystem eine Anzahl von Pendelfederelementen und eine Pendelmassenaufhängung mit einem Gelenkkopf vorgesehen, der ein als Gleitlager ausgebildetes Pendellager aufweist.

Ein als hängendes Pendel ausgebildetes Schwingung reduzierendendes Modul, insbesondere Schwingungstilger-Modul, ist dem Konzept der Erfindung folgend zum einen mit einer als Gleitlager zu bevorzugenden Pendellagerung versehen. Diese ist aus verschiedensten Gründen anderen Lagermöglichkeiten vorzuziehen. Die Erfindung hat erkannt, dass mittels einem Gelenkkopf gemäß dem Konzept der Erfindung ein nachhaltiges und belastbares Aufhängungssystem realisieren lässt, das im Grundsatz vor allem eine wartungsfreie Gleitfläche des Gleitlagers zur Verfügung stellen kann; damit erweist sich die Pendelmassenaufhängung gemäß dem Konzept der Erfindung, als überlegen gegenüber aufwendigeren Systemen und erlaubt zudem eine besonders effiziente Reduzierung einer Störfrequenz eines Bauteils, insbesondere infolge einer geringen Dämpfung des Gleitlagers.

Hinsichtlich des Pendellagers hat die Erfindung darüberhinaus erkannt, dass über die Laufzeit einer Windenergieanlage und trotz widriger Umgebungsbedingungen selbst bei starker Auslenkung des Pendels mit einer geeigneten Auslegung einer Gleitfläche des Gleitlagers dieselbe nachhaltig und für eine hohe Zuverlässigkeit realisierbar ist. Insbesondere ermöglicht es das Konzept der Erfindung, mit dem Gleitlager eine effiziente und wartungsarme Störschwingungsreduzierung zu ermöglichen, die zudem kompakt, raumsparend und --damit insbesondere für eine Windenergieanlage von Vorteil-- umsetzbar ist. Durch den Einsatz einer Anzahl von Schwingungstilger-Modulen lässt sich selbst bei einem unidirektional zur Auslenkung festgelegten Gelenkkopf eine richtungsunabhängige Schwingungstilgung erreichen, die zudem effizient und einfach ist.

Darüber hinaus wird zum anderen bei einer längen- und/oder richtungsunveränderlicher Pendelmassenaufhängung ausdrücklich nicht unmittelbar auf eine Variabilität der Pendelmasse bzw. der unmittelbaren Pendellänge zurückgegriffen; dies aus Gründen einer Kompaktheit des Schwingungstilger-Moduls. Es zeigt sich, dass ein Pendelfederelement selbst bei unveränderlicher Pendelmassenaufhängung ausreichend Einstellmöglichkeiten bieten kann, um eine Pendelmassenaufhängung im Hinblick auf ein Störfrequenzspektrum einer Baueinrichtung einzustellen.

Insbesondere bei einer Verwendung einer Anzahl von Schwingung reduzierendenden Modulen, insbesondere Schwingungstilger-Modulen, bei einer Schwingung reduzierendenden, insbesondere Schwingung tilgenden, Vorrichtung haben sich eine Reihe von Vorteilen herausgestellt. So bleibt bei einem Ausfall eines Schwingungstilgers die Schwingungsfunktion durch die redundante Anordnung jedenfalls teilweise erhalten. Einzelne Schwingungstilger-Module können unterschiedlich eingestellt werden, wodurch eine vergleichsweise breitbandige Schwingungstilgung umgesetzt werden kann. Und schließlich kann eine Lagerung infolge einer für jedes Modul reduzierten Masse noch nachhaltiger ausgeführt werden.

Außerdem bietet das Konzept der Erfindung hat Potenzial für eine bevorzugte Absturzsicherung sowie bietet darüber hinausgehend auch eine Erweiterungsmöglichkeit des Schwingungstilgungskonzepts auf ein Dämpfungskonzept und/oder ein aktiv geregeltes Konzept zur Schwingungsreduzierung bei einer Baueinrichtung. Das Modul und die Vorrichtung bietet die Möglichkeit für eine Absturzsicherung als auch eine Endlagendämpfung sowie einen grundsätzlichen Ausbau eines Dämpfungsaspekts und einer aktiven Komponente für ein Schwingungstilger-Modul.

Bevorzugte Weiterbildungen der Erfindung sind den Unteransprüchen zu entnehmen, die im Einzelnen vorteilhafte Möglichkeiten angeben, die Vorrichtung im Rahmen des Konzepts zur Erfindung mit weiteren Vorteilen weiterzubilden.

Im Rahmen einer besonders bevorzugten Weiterbildung ist wenigstens ein Pendelfederelement der Anzahl von Pendelfederelementen mit einer als Druckfeder ausgelegten Feder versehen. Insbesondere weist jedes Pendelfederelement eine Feder auf und jede der Federn ist als Druckfeder ausgelegt. Eine Druckfederung hat sich als besonders bevorzugt erwiesen, um die Pendelmasse zu stabilisieren. Insbesondere kann bei einem Pendelfederelement vorgesehen sein, dass die Feder unter Druck proximal unter einem Federteller einer Federhalterung angeordnet ist. An einem proximalen Ende der Feder, d. h. einem dem Tragwerk näher liegenden Ende der Feder, ist die Feder --bevorzugt an einem Federteller-- unter Vorspannung, insbesondere unter Druck gehalten. An einem distalen Ende der Feder, d. h. einem der Pendelmasse zunächst benachbarten Ende der Feder, ist die Feder bevorzugt direkt an der Pendelmasse angebracht.

Bevorzugt kann das Pendelfederelement eine Federhalterung aufweisen, die zur variablen Einstellung einer Federlänge der Feder ausgebildet ist. Insbesondere kann mittels der Federhalterung eine Einstellung einer Vorspannung der Feder, insbesondere eine Einstellung einer Druckfederkraft einer Druckfeder erfolgen. Eine Druckfeder lässt sich grundsätzlich nach DIN 13906 auslegen.

Es hat sich als vorteilhaft erwiesen, für eine Feder eine Einstellmöglichkeit über die Federlänge und/oder die Federsteifigkeit vorzusehen. Insbesondere erweist sich dieser Ansatz als vorteilhaft gegenüber anderen Ansätzen zur Beeinflussung der Schwingungstilgung. Zwar ist es grundsätzlich möglich zur weiteren Einstellung einer Tilgungsfrequenz (in Bezug auf eine Störfrequenz) die Pendelmasse und/oder die Pendellänge zu ändern. Gleichwohl kann über die Einstellung einer Druckfederkraft oder einer sonstigen Einstellung einer Federlänge der Feder, eine effektive "Pendellänge" mit vergleichsweise kleiner Masse und bei geringer Raumabmessung erfolgen. Insgesamt wird ein vergleichsweise kompaktes System eines Schwingung reduzierendenden Moduls, insbesondere Schwingungstilger-Moduls, zur Verfügung gestellt. Insbesondere eignet sich ein solches Modul zum Einbau in eng begrenzten Räumlichkeiten eines Bausegments und/oder einer Baueinrichtung.

Zur Umsetzung einer Einstellkonstruktion für das Pendelfederelement haben sich verschiedene Möglichkeiten ergeben. Als besonders bevorzugt hat sich eine Einstellkonstruktion erwiesen, die Einstellmittel oberhalb eines Tragwerks, insbesondere oberhalb einer Tragwerkplatte, vorgesehen sein. Die Einstellkonstruktion weist Einstellmittel auf, welche die Tragwerkplatte durchgreifen, eine Grundplatte, und/oder einen Federteller durchgreifen. Es ist vorgesehen, dass die Einstellmittel ein Trägerprofil aufweisen, dabei ein oberhalb der Grundplatte, angeordnetes Trägerprofil aufweisen. Das Trägerprofil trägt einen variabel einstellbaren Einstellmechanismus und weist einen Anschlag für ein Stellmittel eines Einstellmechanismus auf.

Im Rahmen einer besonders bevorzugten konstruktiven Weiterbildung kann vorgesehen sein, dass zur Realisierung des Einstellmechanismus die Einstellkonstruktion eine Führungsstange mit Drehgewinde aufweist, das in ein als Anschlag dienendes Gewindeloch des Trägerprofils eingreift, wobei die Führungsstange proximal einen Angriff für Drehmittel aufweist und distal ein Stellmittel, das zur Versetzung des Federtellers ausgebildet ist. Das Stellmittel kann beispielsweise einen den Federteller hintergreifenden Anschlag, beispielsweise in Form einer Kontermutter oder dergleichen, aufweisen.

Bevorzugt ist die Feder distal direkt oder indirekt an der Pendelmasse angeschlossen.

Im Falle einer längen- und/oder richtungsunveränderlichen Pendelmassenaufhängung hat es sich in der Gesamtkonzeption als vorteilhaft erwiesen, eine effektive Pendellänge eben durch Einstellung einer Federlänge, insbesondere unter Einstellung einer Druckfederkraft einer Druckfeder, zu ändern. Zusätzlich hat es sich als vorteilhaft erwiesen, dass eine richtungsunabhängige elastische Federung der Pendelmasse, d.h. weitgehend ausgeglichen für alle Bewegungsrichtungen, dadurch erreicht wird, dass eine Anzahl von Federelementen umfänglich der Pendelmasse, insbesondere um eine zentrale Pendelmassenaufhängung herum, angeordnet sind.

Bevorzugte Weiterbildungen sehen eine Abstimmung der Tilgungsfrequenz im Hinblick auf eine Störfrequenz bzw. Störschwingungsfrequenz vor, die zudem vorteilhaft breitbandig auslegbar ist; insbesondere breitbandiger auslegbar ist als dies bei einer identischen Abstimmung aller Pendelfederelemente der Fall wäre.

Bevorzugt, kann insbesondere vorgesehen sein, dass die Anzahl von Pendelfederelementen eine erste Feder, insbesondere Druckfeder, und eine zweite Feder, insbesondere Druckfeder, aufweist, deren Druckfederkraft unterschiedlich ist. Insbesondere können alle Pendelfedern unterschiedliche Druckfederkräfte aufweisen. Es kann sich auch als vorteilhaft erweisen, bestimmte Pendelfederelemente in Symmetriegruppen zu gruppieren und für alle Pendelfedern einer Symmetriegruppe gleiche Druckfederkräfte vorzusehen, während Federn unterschiedlicher Symmetriegruppen unterschiedliche Druckfederkräfte aufweisen.

Insgesamt kann eine im Hinblick auf die Bedürfnisse der Windenergieanlage und der besonderen räumlichen Ausbildung einer Schwingungsform einer zweiten Eigenfrequenz geeignete Richtungsabhängigkeit eines Schwingung reduzierenden Moduls bzw. der elastischen Feder- und Dämpfungseigenschaften derselben einstellbar sein. Dies erweist sich insbesondere zur konstruktiven Realisierung eines Schwingungstilger-Moduls im Hinblick auf die Elastizitäts- und/oder Dämpfungseigenschaften als vorteilhaft bzw. im Hinblick auf effektive Längen- und Richtungseigenschaften desselben.

Insbesondere können die Elastizitäts- und/oder Dämpfungseigenschaften eines Schwingungstilgungs-Moduls abweichend von einer Rotationssymmetrie einstellbar sein.

Gleichwohl kann alternativ eine vergleichsweise rotationssymmetrisch eingestellte Schwingungselastizität und Dämpfungseigenschaft eines Schwingung reduzierenden Moduls, insbesondere Schwingungstilger-Moduls, dadurch erreicht werden, dass die Anzahl von Pendelfederelementen eine erste und eine zweite Feder aufweisen, deren Druckfederkraft gleich ist. Insbesondere kann vorgesehen sein, dass alle Pendelfedern gleiche Druckfederkräfte aufweisen.

Es hat sich als vorteilhaft erwiesen, dass die Anzahl von Pendelfederelementen gerade ist. Insbesondere hat sich eine Anzahl von wenigstens vier Pendelfederelementen, bevorzugt sechs oder acht Pendelfederelementen, als vorteilhaft erwiesen. Die Anzahl von Pendelfederelementen ist bevorzugt drehwinkelsymmetrisch um die zentral auf der Hängeachse angeordnete Pendelmassenaufhängung angeordnet. Die Anzahl von Pendelfederelementen ist bevorzugt an einer Deckseite der Pendelmasse direkt oder indirekt angeschlossen oder anderweitig festgemacht.

Darüberhinaus bevorzugte konstruktive Realisierungsmöglichkeiten für eine Pendelmassenaufhängung können im Rahmen einer Weiterbildung vorgesehen sein. Insbesondere hat es sich als vorteilhaft erwiesen, dass die Pendelmassenaufhängung eine Pendelstange aufweist, die an ihrem proximalen Ende den Gelenkkopf trägt. Insbesondere ist an einem distalen Ende der Pendelmassenaufhängung die Pendelmasse angebracht.

Vorteilhaft ist zur Anbringung der Pendelmasse vorgesehen, dass die Pendelstange die Pendelmasse entlang der Hängeachse durchgreift und die Pendelmasse an einer Grundseite auf einem distalen Anschlag der Pendelstange aufliegt und/oder an einer Deckseite an einem Konteranschlag der Pendelstange gehalten ist. Auf diese Weise ist es möglich eine Pendelmasse, selbst vergleichsweise hohen Gewichts, sicher an der Pendelstange festzulegen.

Vorteilhaft ist zur Ausbildung des Gleitlagers die Pendelmassenaufhängung drehbar gleitend an einem Lagerbolzen gehalten. Bevorzugt ist in dem Gelenkkopf ein Lagerbolzen in einer Lagerbolzenaufnahme gehalten. Die Lagerbolzenaufnahme ist bevorzugt an einem Innenring des Gelenkkopfes gebildet; insbesondere ist zur Ausbildung des Gleitlagers eine dem Lagerbolzen zugewandte Innenfläche des Innenrings als Gleitfläche ausgebildet.

Es hat sich als besonders bevorzugt zur Auslegung eines effizienten und einfachen Gleitlagers erwiesen, dass der Gelenkkopf eine Gleitfläche eines einzigen Gleitlagers aufweist. Eine Ausbildung einer einzigen Gleitfläche eines einzigen Gleitlagers hat sich als vorteilhaft erwiesen, um einen Dichtaufwand und Servicemaßnahmen möglichst gering zu halten. Insbesondere ist Aufwand zur Auslegung des Pendellagers gering gehalten. Gleichwohl kann in einer Abwandlung eines variierten Pendellagers vorgesehen sein, dass der Gelenkkopf eine Anzahl von Gleitflächen eines oder mehrere Gleitlager aufweist. Letztere Abwandlung kann sich als vorteilhaft erweisen, wenn eine Flächenkraft auf einer Gleitfläche eher verringert werden soll, insbesondere Lagerkräfte auf eine möglichst große Gleitfläche verteilt werden sollen.

Bevorzugt ist der Lagerbolzen in der Lagerbolzenaufnahme fest, das heißt nicht drehbar, gehalten, insbesondere arretiert und/oder gekontert. So ist insbesondere Pendelmassenaufhängung und Lagerbolzen eine Gleichlagerung ausgebildet. Bevorzugt ist, dass die Pendelmassenaufhängung einen Gelenkkopf zur gleitenden Lagerung am Lagerbolzen aufweist, insbesondere nur zur gleitenden Lagerung der Pendelmassenaufhängung am Lagerbolzen.

In einer Abwandlung kann zur Ausführung einer Pendelbewegung der Lagerbolzen in der Lagerbolzenaufnahme drehbar gehalten sein. Insbesondere kann zwischen Lagerbolzen und Lagerbolzenaufnahme eine Gleichlagerung ausgebildet sein. Zusätzlich oder alternativ kann in einer Abwandlung die Pendelmassenaufhängung am Lagerbolzen drehbar gehalten sein.

Weitere Weiterbildungen haben sich bewährt hinsichtlich der Auslegung einer Gleitfläche des Gleitlagers, bzw. zum Schutz der Gleitfläche des Gleitlagers. Als besonders bevorzugt hat es sich erwiesen, dass wenigstens ein Teilbereich der Gleitfläche des Gleitlagers aus Wälzlagerstahl besteht, insbesondere das gesamte Gleitlager aus Wälzlagerstahl besteht. Wälzlagerstahl hat sich als besonders widerstandsfähig auch bei langsamer Reibbewegung mit hohen Druckkräften erwiesen. So kann beispielsweise ein Gelenkkopf und/oder der Lagerbolzen und/oder die Lagerbolzenaufnahme ganz oder teilweise, --insbesondere eine Gleitfläche derselben und/oder eine Lagerfläche derselben oder Teilbereiche davon-- aus Wälzlagerstahl bestehen. Auch können Gleitflächen der genannten Bauteile besonders behandelt gehärtet oder hinsichtlich des Elastizitätsmoduls und Härtegrads ausgebildet sein.

Weiter hat es sich als vorteilhaft erwiesen, dass das Gleitlager, insbesondere der Gelenkkopf und/oder der Lagerbolzen und/oder die Lagerbolzenaufnahme, einen Korrosionsschutz aufweist. Als vorteilhaft hat sich ein Korrosionsschutz in Form eines Zinküberzugs erwiesen. Eine Korrosion des Gleitlagers, bzw. insbesondere des Gelenkkopfs ist damit praktisch unterbunden.

Insbesondere hat es sich als vorteilhaft erwiesen, einen Mittel zur Vermeidung eines Feuchtigkeitseintrags in den Bereich eines Gelenkkopfes, insbesondere in den Bereich des Pendellagers, vorteilhaft in den Bereich des Gleitlagers, bzw. der Gleitlagerflächen, vorzusehen. Bevorzugt kann seitlich eines Innenrings des Gelenkkopfes eine Lippendichtung vorgesehen sein. Beispielsweise kann ein Lagerbolzen eine Lippendichtung tragen. Eine Lippendichtung kann beispielsweise auch in abgewandelter Form als einfacher Dichtring oder Lippendichtring oder dergleichen zylindrischen Dichtring variiert werden.

Besonders bevorzugt kann das Schwingungstilger-Modul mit weiteren Maßnahmen gesichert sein, um eine Störschwingung möglichst effektiv zu reduzieren.

Insbesondere kann das Pendelsystem wenigstens ein Dämpferelement aufweisen, das zusätzlich zur Eigendämpfung der Pendelfederelemente eine Tilgungsschwingung des Schwingungstilger-Moduls dämpft. Zwar kann das gegebenenfalls die Amplitude der Schwingungstilgungsfrequenz verringern, jedoch ist dadurch gleichwohl eine breitbandigere Auslegung der Schwingungstilgung möglich.

Insbesondere hat es sich als vorteilhaft erwiesen, dass ein Schwingungstilger-Modul mit einem Amplituden- und/oder Endlagen-Begrenzer oder -Dämpfer versehen ist. Dies hat sich insbesondere als vorteilhaft erwiesen, wenn eine Anzahl von Schwingungstilger-Modulen --gegebenenfalls in enger räumlicher Nachbarschaft nebeneinander-- in einer Vorrichtung angebracht werden. Eine Kollision oder sonstige berührungsähnliche Nähe der Schwingungstilger-Module ist damit entweder sicher unterbunden und/oder es ist bei einer Maximalauslenkung ein geeignete Stoßdämpfung vorgesehen.

Auch hat es sich als vorteilhaft erwiesen, dass das Aufhängungssystem eine Absturzsicherung aufweist; insbesondere eine Zugkonstruktion zwischen Pendelmasse und Tragwerk hat sich als vorteilhaft erwiesen. Bevorzugt kann eine auf Zug einstellbare Zugkonstruktion vorgesehen sein, die sich zwischen der Pendelmasse und dem Tragwerk erstreckt.

Generell hat sich eine Absturzsicherung bei einem Aufhängungssystem als vorteilhaft erwiesen, um im schlimmsten Fall eines Versagens des Aufhängungssystems eine Pendelmasse gleichwohl am Tragwerk zu halten und/oder jedenfalls aber einen ungehinderten Absturz der Pendelmasse zu unterbinden. Insbesondere kann das Aufhängungssystem neben einer eher Stopperfunktion versehenen Amplituden- und/oder Endlagenbegrenzer eine Pendeldämpfung aufweisen, die ausgebildet ist, während einer freien Pendelbewegung die Pendelbewegung zu dämpfen.

In einer Weiterbildung bietet das Schwingung reduzierendende Modul, insbesondere das Schwingungstilger-Modul, die Möglichkeit, an dem Pendelsystem ein aktives Stellglied anzuschließen. Das aktive Stellglied ist insbesondere ausgebildet, eine freie Pendelbewegung der Pendelmasse zu regeln.

Insbesondere kann dies aktive Stellglied Teil einer aktiven Regelung sein. Eine aktive Regelung weist bevorzugt auf:
- einen Phasendetektor zu Detektion einer Relativphase zwischen Schwingungstilger-Modul und Störfrequenz einer Baueinrichtung oder eines Bausegments,
- einen Regler, und
- einen Leistungsverstärker zur Umsetzung der Stellgröße auf das Stellglied.

In dem Fall ist das Schwingungstilger-Modul von einem bloß passiven Modul auf ein aktives Modul erweitert.

Zur Weiterbildung der schwingungstilgenden Vorrichtung kann vorgesehen sein, dass eine Anzahl, insbesondere eine gerade Anzahl, von Schwingung reduzierendenden Modulen, insbesondere Schwingungstilger-Modulen, --ganz oder teilweise identischer Ausbildung oder auch unterschiedlicher Ausbildung-- vorgesehen ist.

Bei identischer Ausbildung einer Anzahl von Schwingungstilger-Modulen bei einer schwingungstilgenden Vorrichtung kann eine hocheffiziente aber vergleichsweise schmalbandige Schwingungstilgung einer Baueinrichtung bewirkt werden. Bei Anbringung einer Anzahl von Schwingungstilger-Modulen mit ungleicher Länge und/oder gleicher Schwingrichtung und/oder gleicher Federspannungseinstellung kann die schwingungstilgenden Vorrichtung dennoch vergleichsweise breitbandig ausgelegt sein.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und· beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnungen.

Im Einzelnen zeigt die Zeichnung in:
- Fig. 1: eine schematische Darstellung einer Windenergieanlage als Beispiel einer Baueinrichtung, die insbesondere aufgrund ihrer schlanken Bauweise eine Anbringung einer schwingungstilgenden Vorrichtung einer bevorzugten Ausführungsform zweckmäßig macht; in Ansicht (A) ist die Windenergieanlage mit einem Hohlturm gezeigt und in Ansicht (B) ist eine besonders auffällige höhere Eigenschwingungsamplitude einer räumlichen Schwingungsform am Hohlturm gezeigt, insbesondere einer zweiten Eigenfrequenz in einem Bereich auf etwa 2/3 der Höhe einer Windenergieanlage;
- Fig. 2: in Ansicht (A) eine schematische Darstellung der Elemente einer allgemeinen schwingungstilgenden Struktur mit Dämpfung in Bezug auf eine für eine Störschwingung anfälligen Hauptstruktur wobei Ansicht (B) eine Darstellung einer Störschwingung eines Turms einer Windenergieanlage mit und ohne Schwingungstilgung zeigt;
- Fig. 3: eine schematische Darstellung eines schwingungstilgenden Moduls als Pendelsystem mit Pendelmasse und mit einem seitlich eingreifenden Federelement;
- Fig. 4: in Ansicht (A) eine schematische Darstellung einer besonders bevorzugten Ausführungsform eines Schwingungstilger-Moduls als Pendelsystem mit einer Pendelmasse, einer Anzahl von Pendelfederelementen und mit einem Aufhängungssystem und in Ansicht (B) eine bevorzugte umfängliche Verteilung der Pendelfederelemente des Aufhängungssystems der Fig. 4 (A);
- Fig. 5: eine besonders bevorzugte, konstruktive Ausführung der bevorzugten Ausführungsform des Schwingungstilger-Moduls der Fig. 4;
- Fig. 6: ein Detail eines Gelenkkopfes der Pendelmassenaufhängung eines Aufhängungssystems beim Schwingungstilger-Modul der Fig. 4 und Fig. 5;
- Fig. 7: ein Detail eines Pendelfederelements der Ausführungsform des Schwingungstilger-Moduls der Fig. 4 und Fig. 5;
- Fig. 8: eine perspektivische Gesamtansicht einer besonders bevorzugten Ausführungsform einer schwingungstilgenden Vorrichtung mit vier Schwingungstilger-Modulen der Fig. 4 und Fig. 5;
- Fig. 9: eine teilperspektivische seitliche Schnittansicht eines Turmsegments für eine Windenergieanlage mit einer schwingungstilgenden Vorrichtung der Fig. 8.

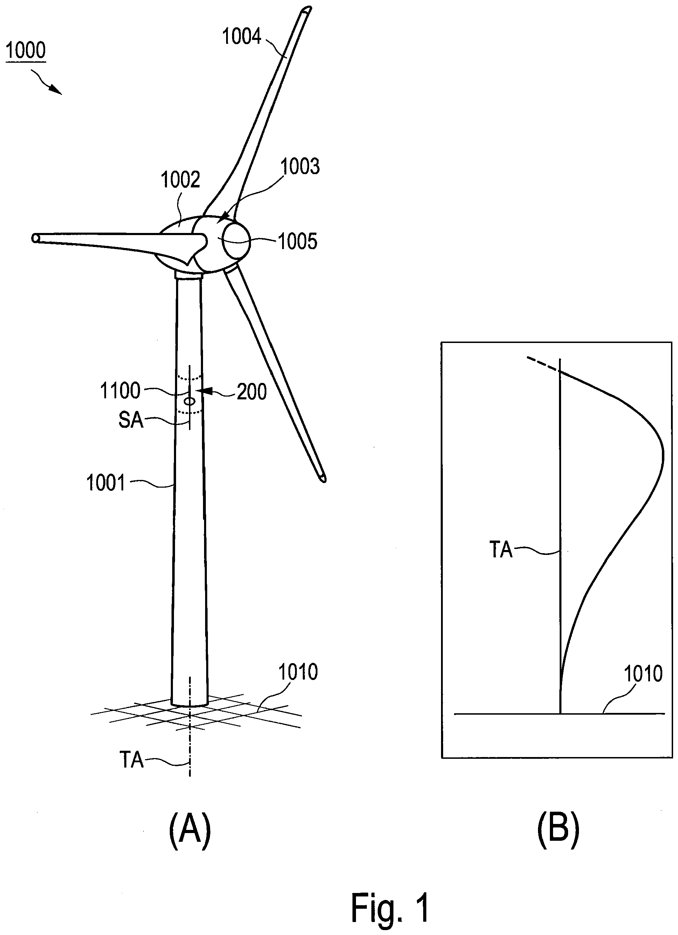

In den Fig. 1 bis Fig. 9 sind für gleiche oder ähnliche Teile oder Teile gleicher oder ähnlicher Funktion der Einfachheit halber gleiche Bezugszeichen benutzt.

Fig. 1 zeigt in Ansicht (A) eine Windenergieanlage 1000 mit einem Turm 1001 und einer auf dem Turm 1001 angebrachten Gondel 1002. Die Gondel 1002 trägt einen Rotor 1003 mit einer Anzahl von vorliegend drei Rotorblättern 1004. Ein Rotorblatt 1004 des Rotors 1003 ist über eine Nabe 1005 mit einer nicht näher dargestellten Welle in der Gondel 1002 verbunden. Dazu ist ein Rotorblatt 1004 über ein Blattlager an einen Nabenadapter angeschlossen und mit der Welle gekoppelt ist. Bei windangetriebenem sich drehenden Rotor 1003 lässt sich über die Welle ein in der Gondel 1002 angeordneter Generator zur Stromerzeugung antreiben. Die vom Generator gelieferte elektrische Energie kann über elektrische Stromrichter, Transformatoren und dgl. weitere geeignete elektrische Einrichtungen zur Einspeisung in ein nicht näher übergestelltes Stromnetz umgewandelt werden; die Einrichtungen können in der Gondel 1002 oder am Grund 1010 im Turm 1001 oder außerhalb des Turms 1001 der Windenergieanlage 1000 angeordnet sein.

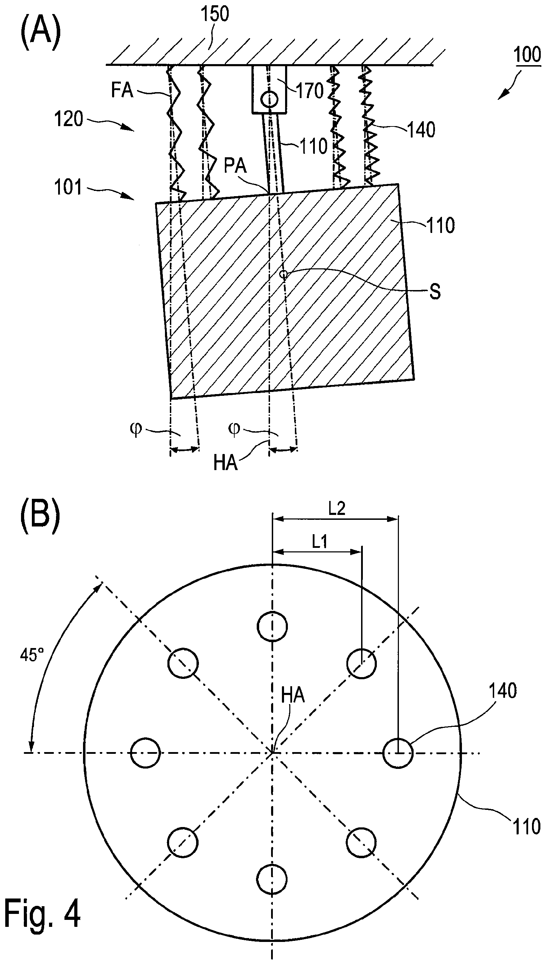

Der Turm 1001 der Windenergieanlage 1000 ist über ein nicht näher dargestelltes Fundament im Grund 1010 eingelassen. Der Turm 1001 der Windenergieanlage 1000 ist aus einer Anzahl von Turmsegmenten 1100 --beispielsweise als hohlzylindrische Stahl- oder Spannbetonsegment-- aufgebaut. Ein zwischen Gondel 1002 und Grund 1010 angeordnetes hier näher bezeichnetes Turmsegment 1100 ist mit einer schwingungstilgenden Vorrichtung 200 ausgestattet, die in Bezug auf die weiteren Fig. 4 bis Fig. 9 in einer bevorzugten Ausführungsform erläutert ist.

Es zeigt sich, dass eine Windenergieanlage 1000, insbesondere bei zunehmend größerer Auslegung, nicht nur höheren Ansprüchen einer Störschwingungsdämpfung und/oder -tilgung genügen muss; es sollte auch eine Ressourcen sparende Konstruktion eines Schwingung tilgenden Moduls 100 bzw. einer Schwingung tilgenden Vorrichtung 200 anzugeben sein. Da das Auftreten von hohen Amplituden ausgeprägter Resonanzerscheinungen bei einer Windenergieanlage 1000 möglichst sicher unterbunden werden sollte, hat sich vor allem ein Schwingungstilger-Modul 100 als vorteilhaft erwiesen, das hier im Rahmen einer besonders bevorzugten Ausführungsform beispielhaft beschrieben ist. Gleichwohl ist zu verstehen, dass das hier beschriebene Schwingungstilger-Modul 100 auch bei zunächst passiver Auslegung und ohne ausdrückliche über eine Eigendämpfung hinausgehende Dämpfermittel ausgebildet dennoch als ein allgemein Schwingung reduzierendendes Modul --insbesondere mit geeigneter aktiver Regelung und/oder Dämpfung versehen-- weitergebildet werden kann.

Eine Windenergieanlage 1000 kann in unterschiedlichster Art zu Schwingungen angeregt werden kann, wobei ein Störschwingungsspektrum bzw. Störschwingungserscheinungen in unterschiedliche Schwingungs-Eigenmoden mit jeweils räumlich ausgeprägter Schwingungsform zerlegt werden kann. Aufgrund der großen Zahl von möglichen SchwingungsAnregungen erweist sich ein Störschwingungsspektrum bzw. eine Störschwingungserscheinung mit unterschiedlichen Schwingungsformen in einer ersten und insbesondere den darüber hinausgehenden höheren Eigenfrequenz als vergleichsweise komplex.

Zum Beispiel können freie und selbst erregte Schwingungen der Windenergieanlage 1000 auch durch periodische oder sonstige innere und äußere Kräfte zur Anregung von Schwingbewegungen überlagert werden. Insbesondere zeigt sich, dass windinduzierte Schwingungen, vor allem durch Böen oder Wirbelablösungen, zu vergleichsweise komplexen Schwingungserscheinungen, insbesondere im unteren Frequenzbereich führen können. Periodische und vergleichsweise hochfrequente Schwingungsanregungen können dadurch entstehen, dass sich zwei hintereinander stehende Windenenergieanlagen aufgrund von Wirbelablösung koppeln, was auch als Bufferting bezeichnet ist. Generell kann die Beeinflussung von Windströmungen dazu führen, dass nah benachbart zueinander stehende Windenergieanlagen Dehn- und Biege- bzw. Torsionsschwingungen ausgesetzt sind, wie beispielsweise beim Galopping oder Flattern. Insbesondere solche und andere Anregungen der Rotorblätter führen zusätzlich zu einem Nickmoment der Gondel 1002 und zu einem Anregungsspektrum des Turms 1001 mit Schwingungsformen jenseits der ersten Eigenfrequenz.

HA bezeichnet zunächst die Hängeachse eines schwingungstilgenden Moduls 100, die im Wesentlichen parallel zu einer Symmetrieachse SA, einer schwingungstilgenden Vorrichtung 200 ist, die im Einzelnen in Fig. 1 und Fig. 8 und Fig. 9 gezeigt ist - dabei entspricht die Symmetrieachse SA im Wesentlichen der Turmachse TA.

In Fig. 1 Ansicht (B) ist beispielhaft eine Amplitude einer höheren, hier zweiten, Eigenfrequenz einer Schwingungsform des Turms 1001 aufgetragen. Eine exakte Kenntnis einer maximal Amplitude einer Schwingungsform am Turm 1001 kann beispielsweise simuliert oder gemessen werden; so ist bekannt, dass gerade Eigenmoden oberhalb der ersten Eigenfrequenz in einem Bereich oberhalb der Hälfte der Höhe des Turms 1001 auftreten. Es zeigt sich, dass eine besonders verlässliche Reduzierung solcher Amplituden durch eine schwingungsreduzierende Vorrichtung mit einem schwingungsreduzierenden Modul erreicht werden kann, das in etwa auf Höhe der größeren Amplitude der Schwingungsform angeordnet ist.

Als Basis eignet sich mit besonderem Vorteil ein Schwingungstilger-Modul 100 bzw. eine schwingungstilgende Vorrichtung 200 wie sie in Fig. 4 bis Fig. 9 beschrieben ist. Diese kann vorteilhaft weiter durch Dämpfungs- oder aktive Regelelemente ergänzt werden, um ein noch breitbandigeres Frequenzspektrum von Tilgungsfrequenzen mir einem zusätzlichen Schwingungsdämpfer bzw. aktiven Dämpfungseigenschaften zu erreichen.

Eine Abstimmung eines Schwingungstilger-Moduls 100 bzw. einer schwingungstilgenden Vorrichtung 200 ist sinnvoll in Anbetracht unterschiedlicher Bauformen einer Windenergieanlage. Es erweist sich zwar zum Teil eine höhere Eigenmode eines Turms 1001 bzw. einer Windenergieanlage 1000 als windrichtungsunabhängig jedoch ist zum Teil auch eine windrichtungsabhängige Einstellung der Schwingungstilgungseigenschaften bei Bedarf sinnvoll.

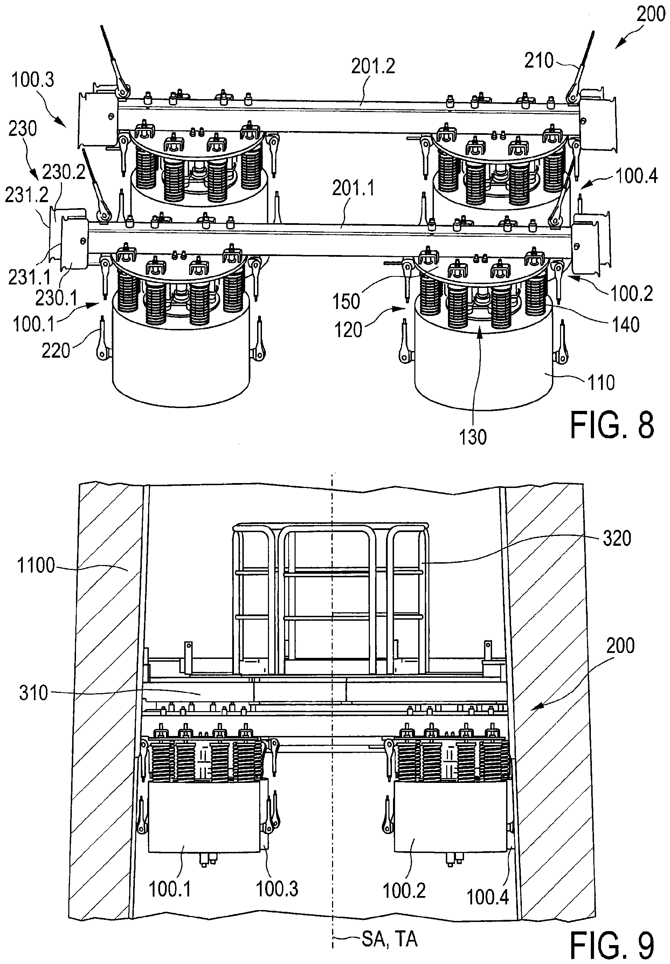

Basis der vorliegenden Ausführungsform ist ein schwingungstilgendes Modul 100 bzw. eine schwingungstilgenden Vorrichtung 200, die zur Schwingungstilgung in etwa auf 2/3 der Höhe einer Länge des Turms 1001 angeordnet ist, d.h. in etwa auf Höhe der größten Amplitude einer höheren Schwingungsform; dies beispielsweise auf eine in Fig. 8 und Fig. 9 gezeigte Art. Als zunächst rein tilgendes und passives Element kann die Ausführungsform des schwingungstilgenden Moduls 100 bzw. der schwingungstilgenden Vorrichtung 200 nachhaltig --insbesondere auf die nominale Lebensdauer der Windenergieanlage ausgelegt-- und für einen sehr breiten Temperaturbereich von -40 °C bis +60 °C eingesetzt werden.

Das nachfolgend beschriebene Schwingungstilger-Modul 100 bzw. die schwingungstilgenden Vorrichtung 200 ist durch Einstellung einer sogenannten "effektiven Pendellänge" --gleichwohl ohne Änderung einer tatsächlichen Länge eines Aufhängungssystems und/oder ohne Änderung der Pendelmasse-- hinsichtlich der Tilgungsfrequenz auf eine Störfrequenz einstellbar; damit ist eine Feinabstimmung des gesamten schwingungsreduzierenden Systems möglich. Vorliegend soll eine Eigenfrequenz von 1,48 Hz reduziert werden in einem Frequenzbereich von 0,4 bis 3 Hz.

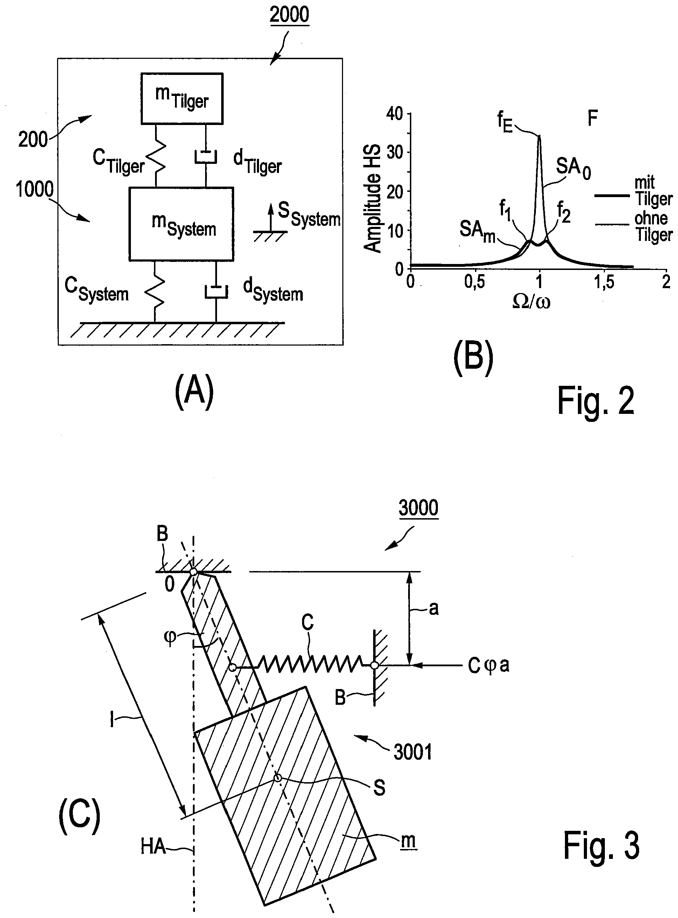

Fig. 2 zeigt schematisch in Ansicht (A) ein System 2000 --exemplarisch z. B. für das einer Windenergieanlage 1000-- mit einer schwingungsreduzierenden Vorrichtung 200 in Ankopplung an ein schwingfähiges Bauwerk --wie z. B. einen Turm 1001 einer Windenergieanlage 1000 unter Bildung des gekoppelten Systems 2000 von Vorrichtung 200 und Windenergieanlage 1000-- mit einer Anlagenmasse m_{System} der Windenergieanlage 1000 und einer Tilgermasse m_{Tilger,} d.h. im wesentlichen einer Pendelmasse 110. Die mit S_{System} dargestellte Pfeilrichtung gibt die Symmetrieachse des Turms 1001 der Windenergieanlage 1000 an. Die Schwingfähigkeit und Dämpfung ist dargestellt durch eine Federkonstante C_{System} und eine Dämpfungskonstante d_{System} bzw. für den Tilger Federkonstante C_{Tilger} und Dämpfungskonstante d_{Tilger}. Die Federkonstanten verstimmen die Tilgerfrequenzen des Tilgers im Hinblick auf eine Störfrequenz des Systems; dienen also vor allem zur Einstellung der Tilgerfrequenz, um den tilgenden und gegebenenfalls zusätzlich dämpfenden Effekt des Tilgers zu erhöhen.

Fig. 2 zeigt dazu in Ansicht (B) die nach dem Modell in Ansicht (A) resultierende Amplitude einer Störschwingung SA₀ bei einer Eigenfrequenz f_{E} der Störschwingung ohne schwingungsreduzierende, insbesondere ohne schwingungstilgende, Maßnahme. Als SAₘ ist der Verlauf einer geminderten Störschwingungsamplitude gezeigt, wobei ein dynamischer Schwingungstilger zum Einsatz kommt, der an sich ungedämpft und passiv ausgeführt ist. Wie generell, so auch bei dem in Fig. 2 Ansicht (A) dargestellten, gekoppelten System 2000 wird die Eigenfrequenz f_{E} der dargestellten Schwingungsform aufgespalten in zwei nahe beieinander, um die Eigenfrequenz f_{E} der Störschwingung herum liegende Frequenzen f₁ f_{2.} Ein Vorteil ist die praktisch vollständige Auslöschung, jedenfalls starke Reduzierung, der Amplitude bei f_{E} auf wenigstens 2/3 des ursprünglichen Wertes. Gegebenenfalls kann zu berücksichtigen sein, dass sich außerhalb der Eigenfrequenz f_{E} vergleichsweise geringe Amplituden der Frequenzaufspaltung f₁, f_{2.} ergeben. Insbesondere aus diesem Grund kann es sinnvoll sein, die hier im Weiteren dargestellte Ausführungsform eines Schwingungstilgers mit zusätzlicher Dämpfung bzw. aktiver Regelung zu versehen, um auch die Amplituden der aufgespaltenen Frequenzen f₁, f_{2.} des gekoppelten Systems 2000 zu reduzieren.

Fig. 3 zeigt schematisch die grundsätzliche Funktionsweise eines als Pendelsystem ausgeführten Schwingungstilgersystems 3000. An einem Aufhängepunkt 0 am Bauwerk B ist ein über den Schwerpunkt S beschreibbares Pendel 3001 der Länge l mit einer Pendelmasse m bei einer Auslenkung ϕ zur Hängeachse HA und mit einer elastischen Federkopplung einer Federkonstante C zum Bauwerk B beschreibbar. In eine Bewegungsgleichung für das Schwingungstilgersystem 3000 geht neben der Pendellänge l und der Pendelmasse m auch die Federkonstante C und ein Abstand a zum Aufhängepunkt 0 ein; dies ist beispielsweise von Petersen in "Dynamik der Baukonstruktion" (Vieweg 2000, erste Auflage, München) beschrieben. Über die entsprechende, als Feder dargestellte, elastische bzw. dämpfende Kopplung C ist eine mit ihrem Schwerpunkt S dargestellte Pendelmasse um den Winkel auslenkbar; die Federkonstante C verstimmt dabei die Eigenfrequenz des Pendels, d. h. dient hier vor allem zur Einstellung der Tilgerfrequenz, um den tilgenden und gegebenenfalls zusätzlich dämpfenden Effekt der Vorrichtung 200 zu erhöhen.

Insgesamt lässt sich eine Federlänge a gemäß dem Hookeschen Gesetz bei Kenntnis der Federrate und der Längung bzw. Stauchung einstellen als F=C ^{∗} Δ l bzw. im Falle einer Vorspannung F=C ^{∗} (L_{V} +- Δ l).

Fig. 4 zeigt gemäß dem Konzept der Erfindung in Ansicht (A) schematisch eine darüber hinausgehende besonders bevorzugte Ausführungsform eines Schwingungstilger-Moduls 100 für eine weiter in Fig. 8 beschriebene schwingungstilgende Vorrichtung 200 zur Verwendung bei einer in Fig. 1 und Fig. 9 dargestellten Windenergieanlage 1000. Das Schwingungstilger-Modul 100 ist zur hängenden Anbringung an der schwingungstilgenden Vorrichtung 200, und über diese, an dem Turmsegment 1100 der Windenergieanlage 1000 ausgebildet. Das Schwingungstilger-Modul 100 weist dazu auf, ein Pendelsystem 101 mit einer Pendelmasse 110 und mit einem Aufhängungssystem 120 zur Aufhängung der Pendelmasse 110 an einem Tragwerk 150. Das Aufhängungssystem 120 weist neben einer Pendelmassenaufhängung 130, die über einen Aufhängungskopf 170 am Tragwerk 150 befestigt ist, auch eine Anzahl von Pendelfederelementen 140 auf, die zwischen der Pendelmasse 110 und dem Tragwerk 150 in Richtung einer Hängeachse HA des Schwingungstilger-Moduls 100 verlaufen; die Hängeachse HA entspricht im Wesentlichen einer in Fig. 1 gezeigten Turmachse TA.

Das Aufhängungssystem 120 ist vorliegend für einen um die Auslenkung ϕ relativ zur Hängeachse HA ausgelenkten Schwerpunkt S der Pendelmasse 110 gezeigt. Im unausgelenkten Zustand verlaufen die hier gezeigten Federachsen FA der Pendelfederelemente 140 als auch die Achse PA der Pendelmassenaufhängung 130 im Wesentlichen parallel zur Hängeachse HA bzw. sind im ausgelenkten Zustand relativ zur Hängeachse HA ausgelenkt.

Aus Fig. 4 Ansicht (B) ist weiter ersichtlich, dass umfänglich um die Hängeachse HA acht Pendelfederelemente 140 symmetrisch verteilt sind; bei dem vorliegend symbolisch gezeigten Ausführungsformen eines Schwingungstilger-Moduls 100 sind diese also vertikal ausgerichtet, d. h. mit ihrer Federachse FA im unausgelenkten Zustand parallel zur Hängeachse HA und im ausgelenkten Zustand im Wesentlichen parallel zur Pendelachse PA der Pendelmassenaufhängung 130 mitgeführt.

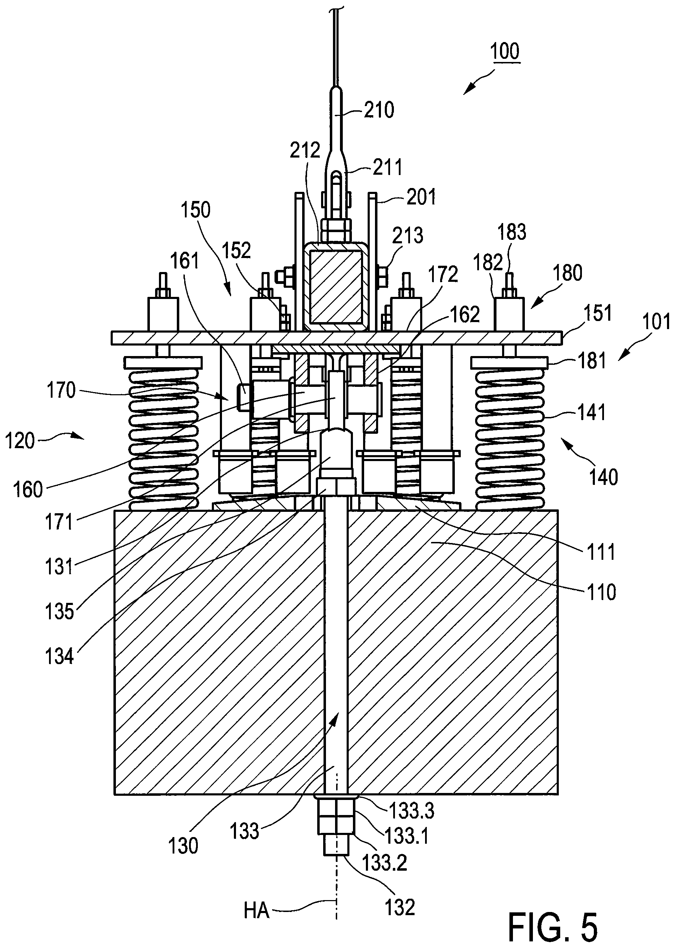

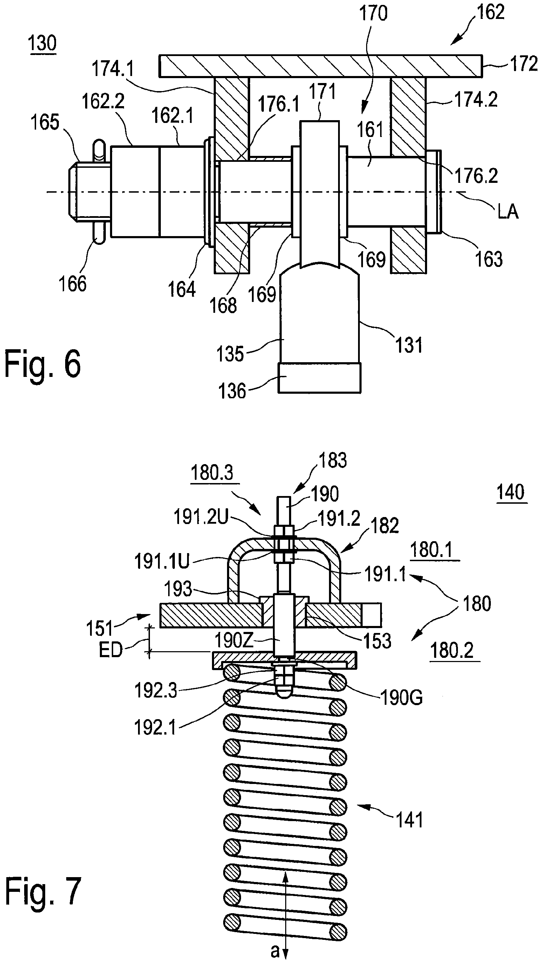

Wie im Einzelnen anhand der folgenden Fig. 5 und Fig. 7 erläutert ist, sind die Federelemente 140 in bevorzugter Weise zur Einstellung des Schwingungstilger-Moduls 100 ausgebildet. Ein unter realen Bedingungen einsetzbares Schwingungstilger-Modul 100 sollte grundsätzlich einstellbar gestaltet sein, um eine Tilgerfrequenz f im Hinblick auf ein Frequenzspektrum F einer Störschwingung auszulegen, insbesondere um die Tilgerfrequenz f auf eine Eigenfrequenz f_{E} abzustimmen. Dieser Abstimmungsbedarf kann beispielsweise durch fertigungstechnische Toleranzen, wie Geometrieabweichungen, Massenabweichungen und abweichende Federraten bei einer Windenergieanlage 1000 bereits entstehen, selbst wenn ein Störfrequenzspektrum nach Bauauslegung berechenbar ist.

Grundsätzlich sieht das in Fig. 5 im Detail dargestellte Schwingungstilger-Modul 100 eine Einstellmöglichkeit der Pendelfederelemente 140 vor; dies mit dem Vorteil, dass eine aufwendige Längenänderung der Pendelmassenaufhängung 130 vermieden ist. Dies hat auch den Vorteil, dass die Pendelmassenaufhängung 130 gezielt auf eine nachhaltige, wartungsfreie und gleichwohl einfache Konstruktion des Aufhängungssystems 120 ausgelegt werden kann.

Insbesondere wurde im Rahmen der vorliegenden Ausführungsform sowie generell gemäß einem weiterbildenden Konzept der Erfindung erkannt, dass eine Veränderung einer Vorspannung eines Pendelfederelements 130, insbesondere über eine Veränderung einer Vorspannlänge einer als Druckfeder ausgelegten Feder 141 eines Pendelfederelements 140 effektiv ein analoger Effekt wie mit einer Pendelmassenvergrößerung oder einer Pendellängenveränderung erreicht werden kann. Im vorliegenden Fall wird dieser Umstand mit Hilfe einer effektiven Pendellängenveränderung beschrieben - gemeint ist damit eine effektive --aber nicht räumliche-- Verlängerung oder Veränderung einer Pendellänge l, lediglich über die Ausgestaltung einer Federvorspannung eines Pendelfederelements 140, insbesondere eine Einstellung einer Druckfederkraft der Druckfeder des Pendelfederelements 140 über die Federlänge der Feder 141.

Insbesondere ist, wie in Fig. 4 weiter ersichtlich ist, vorgesehen, die Pendellagerung mit Druckfedern einer Anzahl von Pendelfederelementen 140 zu ergänzen; der Druck wird mittels einer Tragwerksplatte 151 auf vorliegend acht Druckfedern aufgesetzt. Die Pendelfederelemente 140 sind entlang einem Umfangsverlauf gleichmäßig verteilt. Ein Einstellmittel zur Einstellung einer Federlänge für ein Pendelfederelement 130 ist derart ausgebildet, dass eine justierend vorgebende Drehbewegung in eine druckeinstellende Translationsbewegung umwandelbar ist.

Die Anordnung von vorliegend acht Pendelfederelementen 140 auf einem Kreisumfang verteilt, erlaubt eine in alle Bewegungsrichtungen weitgehend gleichmäßige Federung der Pendelmasse 110 gegen die Tragwerksplatte 151; dies mit technisch akzeptablem Aufwand. Generell gilt darüberhinaus, dass eine höhere Anzahl von Pendelfederelementen 140 eine Richtungsabhängigkeit der Pendeleigenschaften reduzieren würde. Im vorliegenden Fall erweist es sich als besonders vorteilhaft, dass die Pendelfederelemente 140 praktisch auf gleicher Höhe wie eine Pendelmassenaufhängung 110 an einem Tragwerk 150 ansetzen, nämlich indem ein Ansatzpunkt auf gleicher Ebene der Tragwerksplatte 151 gegeben ist.

Fig. 5 zeigt im Einzelnen ein Schwingungstilger-Modul 100 mit dem Pendelsystem 101 an einem Tragwerk 150. Das Tragwerk 150 weist eine Tragwerksplatte 151 auf, an deren Unterseite --in vertikaler Richtung, d. h. entlang der Hängeachse HA hängend-- das Pendelsystem 101 mit dem Aufhängungssystem 120 zur hängenden Anbringung der Pendelmasse 110 befestigt ist.

Die Tragwerksplatte 151 selbst ist an ihrer Oberseite von einem Profilträger 201 der schwingungstilgenden Vorrichtung 200 gehalten. Der Profilträger 201 kann beispielsweise an einem Turmsegment 1100 des Turms 1001 der Windenergieanlage 1000 festgemacht werden.

Der Profilträger 201 ist darüber hinaus über eine Zug- und Spannvorrichtung 210 gehalten. Die Zug- und Spannvorrichtung 210 ist längenveränderbar. An ihrem unteren Ende weist die Zug- und Spannvorrichtung 210 ein Gelenk 211 auf, an dem ein Befestigungsprofil 212 winkelverstellbar angebracht und in den Aufnahmebereich des Profilträgers 201 eingepasst ist. Das Befestigungsprofil 212 und das Trägerprofil 201 sind beidseitig von einer Tragschraube 213 durchgriffen, die beidseitig auf der Außenseite des Trägerprofils 201 anschlägt, insbesondere vorliegend durch eine Mutter gekontert ist.

Die Tragwerksplatte 151 bietet auf gleicher Höhe eine ebene Anschlagfläche auf ihrer Unterseite für einerseits einen Gelenkkopf 131 an einem Aufhängungskopf 170 der Pendelmassenaufhängung 130; der Gelenkkopf 131 weist ein als Gleitlager ausgebildetes Pendellager 160 auf, das zwischen einem Lagerbolzen 161 und einer Lagerbolzenaufnahme 162 gebildet ist.

Im Einzelnen ist der Aufhängungskopf 170 in Fig. 6 gezeigt und zeigt die Ausbildung des Gelenkkopfes 160 mit einer Trägerplatte 172 der Lagerbolzenaufnahme 162 und einen Innenring 171 am Lagerbolzen 161. Die Trägerplatte 172 der Lagerbolzenaufnahme 162 ist in der vorliegenden Ausführungsform an der Tragwerksplatte 151 durch Schraubverbindungen 152 festgemacht, welche auf einer Unterseite der Trägerplatte 172 und einer Oberseite der Tragwerksplatte 151 anschlagen. Das Trägerprofil 201 kann an seiner Stoßkante zur Tragwerksplatte 151 beispielsweise festgeschweißt oder anderweitig durch Material-, Form- oder Kraftschluss festgemacht sein.

Die Lagerbolzenaufnahme 162 weist darüber hinaus eine erste und eine zweite senkrecht zur Trägerplatte 172 angeordnete Wangenplatte 174.1, 174.2 auf. Jede der Wangenplatten 174.1, 174.2 weist eine Lagerbohrung 176.1, 176.2 auf, die zur vorzugsweise passgenauen Aufnahme des Lagerbolzens 161 entlang der Lagerachse LA ausgebildet sind. Der Lagerbolzen 161 selbst ist auf einer Außenseite einer zweiten Wangenplatte 174.2 über einen Anschlag 163 des Lagerbolzens 161 festgelegt. Auf einer ersten Außenseite einer ersten Wangenplatte 174.1 ist der Lagerbolzen 161 gekontert und weist dazu ein Außengewinde 165 auf. Eine erste und zweite Kontermutter 162.1, 162.2 auf dem Außengewinde 165 sind über eine Unterlegscheibe 164 von der ersten Außenseite der ersten Außenwangenplatte 174.1 beabstandet und durch einen Splint 166 am Ende des Lagerbolzens 161 zusätzlich gegen Lösen gesichert. Die Muttern 162.1, 162.2 sind vorzugsweise jeweils als Sechskantmutter ausgeführt. Zwischen den Wangenplatten 174.1, 174.2 ist ein Innenring 171 des Lagerbolzens mittig auf Abstand zwischen den Wangenplatten 174.1, 174.2 durch eine Distanzbuchse 168 gehalten.

Auf einer dem Lagerbolzen zugewandten Innenseite des Innenrings 171 ist eine ein Gleitlager ausbildende Gleitfläche ausgebildet. Der Innenring 171 ist auf seinen den Wangenplatten 174.1, 174.2 zugewandten Außenseiten außerdem durch eine Lippendichtung 169 beidseitig abgedichtet. Die Lippendichtungen 169 sind vorliegend aus Polyurethan gebildet und weisen damit eine gute Kälteelastizität und geringe Rückstellkräfte auf.

Der Innenring 171 bildet mit seiner dem Lagerbolzen 161 passgenau aufliegenden Gleitfläche zusammen mit der der Gleitfläche des Innenrings zugewandten gegenüberliegenden Gleitfläche des Lagerbolzens 161, das Gleitlager. Die Gleitflächen des Gleitlagers sind hier aus Wälzlagerstahl gebildet. Alle Bauteile des Gelenkkopfes 131 als auch der Lagerbolzen 161 sowie die Lagerbolzenaufnahme 162 sind mit einem korrosionsschützenden Zinküberzug versehen. Der Gelenkkopf 131 kann zusätzlich oder alternativ, insbesondere bei Bedarf auch im Bereich der Gleitschicht, mit einer Teflon-Gleitschicht versehen sein. Dies verringert den Reibwiderstand und sichert die Beständigkeit des Gleitlagers.

Der Gelenkkopf 131 setzt sich einstückig oder formschlüssig in eine Pendelstange 133 der Pendelmassenaufhängung 130 fort. Die Pendelstange 133 durchsetzt zentral die Pendelmasse 110 und trägt an ihrem unteren Ende 132 einen Satz Kontermuttern 133.1, 133.2 auf einer Unterlegscheibe 133.3, die gegen Lösen gesichert sind.

Zwischen dem Gelenkkopf 131 und der Pendelstange 133 ist ein den Innenring 171 im Ansatz geeignet fortsetzendes Ansatzstück 135 vorgesehen, das direkt an die Pendelstange 133 anschließt. Zwischen dem einen Anschlag 136 bildenden Ansatzstück 135 sitzt eine weitere Kontermutter 134 auf der Pendelstange und legt eine Druckplatte 111 oberhalb der Pendelmasse 110 fest. Die Pendelmasse 110 sitzt zwischen der Druckplatte 111 und der Unterlegscheibe 133.3 fest; dies entsprechend dem Anzugsmoment der Kontermuttern 134, 133.1, 133.2.

Weiter Bezug nehmend auf Fig. 5 und Fig. 7 zeigt diese eine Anzahl von Pendelfederelementen 140 in Richtung der Hängeachse HA zwischen Pendelmasse 110 und Tragwerk 150, nämlich konkret zwischen einer Oberseite der Pendelmasse 110 und einer Unterseite der Tragwerksplatte 151. Im Einzelnen sind die Teile in Fig. 7 dargestellt, wobei ein Pendelfederelement 140 in Bezug auf die Tragwerksplatte 151 eine als Druckfeder ausgelegte Feder 141 aufweist. Das Pendelfederelement 140 weist auch einen Einstellmechanismus 180 auf, von dem ein erster Teil 180.1 oberhalb der Tragwerksplatte 151 und ein zweiter Teil 180.2 unterhalb der Tragwerksplatte 151 sitz. Der Einstellmechanismus 180 weist außerdem einen dritten, an einer Führungsstange befindlichen Teil 180.3 auf, welcher konkret zum Versatz des zweiten Teils 180.2 gegen den ersten Teil 180.1 ausgebildet ist.

Konkret ist dazu vorgesehen, dass ein Federteller 181 unterhalb der Tragwerksplatte 151 und von dieser beabstandet als Basis für den zweiten Teil 180.2 vorgesehen ist. Der Federteller 181 hält die als Druckfeder ausgebildete Feder 141 unter dem Federteller 181 auf Druckspannung, so dass diese unter Verkürzung ihrer Federlänge vorgespannt ist. Ein Abstand ED zum Einstellen der Federlänge a lässt sich über den vorgenannten dritten Teil 180.3 des Einstellmechanismus 180 einstellen.

Ein Trägerprofil 182 hält unter Bildung eines ersten Teils 180.1 des Einstellmechanismus 180 oberhalb der Tragwerksplatte 151 den variabel einstellbaren Versteller 183 als dritten Teil 180.3 des Einstellmechanismus hält. Der Versteller 183 ist Teil eines Federvorspannsystems, das sich gegen den ersten Teil 180.1 in Form des Trägerprofils 182 abstützt und das eine Druckvorspannung mittels des ersten Teils 180.1 auf den Federteller 181 und darüber auf die Feder 141 gibt. Der dritte Teil 180.3 mit dem Versteller 183 arbeitet vorliegend auf unter Umwandlung von Drehbewegung in eine Translationsbewegung. Der Versteller 183 ist dazu im Wesentlichen als Bewegungsschraube ausgebildet.

Die Reibung an den Federenden beim Einstellen der Vorspannlänge ist möglichst gering gehalten. Außerdem ist sichergestellt, dass der Federteller 131 beim Drehen der Führungsstange 190 nicht mitdreht. Um dies zu gewährleisten ist die Bewegungsschraube des Verstellers 183 mit einem Bereich versehen, der eine eckige Form, nämlich hier ein Quadratprofil 190Q hat. Im Bereich des Quadratprofils 190Q wird die Führungsstange 190 geführt. Hierzu werden vorliegend kreisrunde Polymerbuchsen mit einem quadratischen Loch versehen und mittels eines Zwei-Komponenten-Industrieklebers eingeklebt. In einer einfacheren Variante kann mittels eines Fräsers ein quadratisches Loch in die Tragwerksplatte 151 eingebracht, z. B. gefräst werden.

Die Bewegungsschraube des Verstellers 183 weist eine Führungsstange 190 mit dem abschnittsweisen Quadratprofil 190Q im mittleren Abschnitt auf, das im vorliegend in Form eines umgekehrten U-Profils gebildeten Trägerprofil 182 sitzt. Das Quadratprofil 190Q ist beidseitig durch eine erste und zweite Sechskantmuttern als Konterschrauben 191.1, 191.2 mit zugeordneten Unterlegscheiben 191.1U, 191.2U flankiert. Weiter durchsetzt die Führungsstange 190 eine in der Tragwerksplatte 151 sitzende --nämlich in einer Öffnung 153 derselben eingelassene-- Führungsbuchse 193.

Weiter durchsetzt die Führungsstange 190 den Federteller 181; dies ohne Führungsbuchse zwischen einem verbreiterten Zylinderprofil 190Z der Führungsstange 190 und einem Gewindeansatz 190G der Führungsstange 190. Zur Bildung des verbreiterten Zylinderprofils 190Z kann die Führungsstange 190 auch einen schmalen Querschnitt aufweisen und damit eine Buchse oder dergleichen Hülse zur Bildung des zylindrischen Außenprofils des Zylinderprofils 190Z durchsetzen. An einem dem Quadratprofil in 190Q gegenüber liegenden Ende der Führungsstange 190 trägt diese den Gewindeansatz 190G, welcher von einer Unterlegscheibe und zwei Kontermuttern 192.1, 192.2 --die eine als Sechskantmutter, die andere als Hutmutter ausgebildet-- übergriffen ist.

Fig. 8 zeigt eine bevorzugte Ausführungsform einer schwingungstilgenden Vorrichtung 200 mit vorliegend vier Schwingungstilger-Modulen 100.1, 100.2, 100.3, 100.4. Der in Fig. 5 gezeigt Profilträger 201 ist --hier als Profilträger 201.1 und Profilträger 201.2-seitlich durch Flansche oder dergleichen Anbringungskonstruktionen 230 in einem Turmsegment 1100 festgemacht. Vorliegend sind für den ersten Profilträger 201.1 ein erster kürzerer Steg 230.1 mit einem endseitigen ersten abgebogenen Flansch 231.1 und ein zweiter längerer Steg 230.2 mit einem endseitigen zweiten abgebogenen Flansch 231.2 vorgesehen, um eine dem Verlauf der Innenmantelseite des Turmsegments sachgerechte Anbringung umzusetzen. Dabei sind jeweils paarweise zwei Schwingungstilger-Module 100.1, 100.2, bzw. 100.3, 100.4 an einem Trägerprofil 201.1, bzw. 201.2 eines Tragwerks 150 festgemacht. Erkennbar ist --zusätzlich zu den bereits in Fig. 5 bis Fig. 7 erläuterten Merkmal-- eine auf Zug einstellbare Zugkonstruktion 220, die als Absturzsicherung dient; vorliegend beispielhaft, die Pendelmasse 110 mit einem Trägerprofil 201.1 bzw. 201.2 verbindet.

Die Konstruktion eines schwingungstilgenden Moduls 100 bzw. der Vorrichtung 200 kann im Turmsegment 1100 gut zugänglich und damit vor allem wartungsfrei und verschleißfest eingebaut sein. Es können Anschlagpuffer an einem Schwingungstilger-Modul 100 bzw. bei der schwingungstilgenden Vorrichtung 200 vorgesehen sein, um einen Maximalausschlag eines Moduls räumlich zu begrenzen und so das Turmsegment 1100 vor Beschädigungen zu schützen. Wie in Fig. 9 im Detail dargestellt kann eine schwingungstilgende Vorrichtung 200 über ein Podest 300 erreichbar sein. Eine Plattform 310 des Podestes 300 ist oberhalb der durch das Trägerprofil 201.1, bzw. 201.2 gebildeten Plattform angeordnet. Das Podest 300 weist ein Stützgeländer 320 um einen Freiraum entlang der Turmachse TA auf, über den ein Zugriff auf die schwingungstilgende Vorrichtung 200 möglich ist; das Stützgeländer 320 kann für diese Zwecke entfernt oder umgangen werden. So kann eine Federlänge für ein Pendelfederelement 130 nicht nur über ein standardisiertes Werkzeug und vergleichsweise einfach einstellbar sein. Eine Federlänge kann darüber hinaus kalibrierbar und messbar eingestellt werden; insgesamt kann die schwingungstilgende Vorrichtung 200 mit vergleichsweise wenig Aufwand einfach und determinierbar eingestellt werden.

### Bezuqszeichenliste

- 100: Schwingungstilger-Modul
- 100.1, 100.2, 100.3, 100.4: Schwingungstilger-Module
- 101: Pendelsystem
- 110: Pendelmasse
- 111: Druckplatte
- 120: Aufhängungssystem
- 130: Pendelmassenaufhängung
- 131: Gelenkkopf
- 132: unteres Ende
- 133: Pendelstange
- 133.1, 133.2: Kontermutter eines Satzes von Kontermuttern
- 133.3: Unterlegscheibe
- 134: weitere Kontermutter
- 135: Ansatzstück
- 136: Anschlag
- 140: Pendelfederelement
- 141: Feder
- 150: Tragwerk
- 151: Tragwerksplatte
- 152: Schraubverbindung
- 153: Öffnung
- 160: Pendellager
- 161: Lagerbolzen
- 162: Lagerbolzenaufnahme
- 162.1, 162.2: Mutter / Kontermutter
- 163: Anschlag
- 164: Unterlegscheibe
- 165: Außengewinde
- 166: Splint
- 168: Distanzbuchse
- 169: Lippendichtung
- 170: Aufhängungskopf
- 171: Innenring
- 172: Trägerplatte
- 174.1, 174.2: Wangenplatte
- 176.1, 176.2: Lagerbohrung
- 180: Einstellmechanismus
- 180.1: erster Teil
- 180.2: zweiter Teil
- 180.3: dritter Teil
- 181: Federteller
- 182: Trägerprofil
- 183: Versteller
- 190: Führungsstange
- 190Z: Zylinderprofil
- 190G: Gewindeansatz
- 190Q: Quadratprofil
- 191.1, 191.2: Konterschrauben
- 191.1U, 191.2U: Unterlegscheiben
- 192.1, 192.2, 192.3: Kontermutter
- 193: Führungsbuchse
- 200: schwingungstilgende Vorrichtung
- 201: Profilträger / Trägerprofil
- 201.1, 201.2: Profilträger / Trägerprofil
- 210: Zug- und Spannvorrichtung
- 211: Gelenk
- 212: Befestigungsprofil
- 213: Tragschraube
- 220: Zugkonstruktion
- 230: Anbringungskonstruktion
- 230.1: erster Steg
- 230.2: zweiter Steg
- 231.1: erster Flansch
- 231.2: zweiter Flansch
- 300: Podest
- 310: Plattform
- 320: Stützgeländer
- 1000: Windenergieanlage
- 1001: Turm
- 1002: Gondel
- 1003: Rotor
- 1004: Rotorblätter
- 1005: Nabe
- 1010: Grund
- 1100: Turmsegment
- 2000: System
- 3000: Schwingungstilgersystem
- 3001: Pendel
- B: Bauwerk
- C: elastische bzw. dämpfende Kopplung
- ED: Abstand
- F: Frequenzspektrum
- FA: Federachse
- HA: Hängeachse
- LA: Lagerachse
- PA: Achse
- S: Schwerpunkt
- SA: Symmetrieachse
- TA: Turmachse

## Patentansprüche

1. Schwingung reduzierendes Modul, aufweisend:
- ein Tragwerk (150),
- ein Pendelsystem (101) mit einer Pendelmasse (110) und mit einem Aufhängungssystem (120) zur Aufhängung der Pendelmasse (110) an dem Tragwerk (150), wobei
das Aufhängungssystem eine in Richtung einer Hängeachse verlaufende Pendelmassenaufhängung (130) aufweist, die über einen Aufhängungskopf (170) an dem Tragwerk befestigt ist, wobei
- das Aufhängungssystem (120) eine Anzahl von in Richtung der Hängeachse (HA) verlaufende Pendelfederelemente (140) parallel zur Pendelmassenaufhängung (130) aufweist, wobei im unausgelenkten Zustand eines Pendelfederelements (140) eine Federachse (FA) des Pendelfederelements (140) parallel zur Hängeachse (HA) verläuft, und
- der Aufhängungskopf (170) der Pendelmassenaufhängung (130) einen Gelenckopf (131) aufweist, der an dem Tragwerk befestigt ist,
**dadurch gekennzeichnet, dass**
- der Aufhängungskopf (170) ein als Gleitlager ausgebildetes Pendellager aufweist, und
- das Pendelfederelement (140) eine als Druckfeder ausgelegte Feder (141) und eine Federhalterung aufweist, die zur variablen Einstellung einer Federlänge der Feder ausgebildet ist und/oder zur Einstellung einer Druckfederkraft der Feder, wobei ein Federteller einseits einer Grundplatte beabstandet ist, die anderseits ein Trägerprofil (182) aufweist, das einen variabel einstellbaren Einstellmechanismus (180) trägt, und das Trägerprofil (182) einen Anschlag und ein Stellmittel aufweist.

2. Modul nach Anspruch 1, **dadurch gekennzeichnet, dass** der Einstellmechanismus (180) eine Führungsstange (190) mit Drehgewinde aufweist, das in ein als Anschlag dienendes Gewindeloch eingreift, wobei die Führungsstange (190) proximal einen Angriff für Drehmittel aufweist und distal ein Stellmittel, das zur Versetzung des Federtellers (181) ausgebildet ist.

3. Modul nach einem der vorhergehenden Ansprüche, **dadurch gekennzeichnet, dass** die Anzahl von Pendelfederelementen (140) drehwinkelsymmetrisch um die zentral auf der Hängeachse (HA) angeordnete Pendelmassenaufhängung (130) angeordnet sind.

4. Modul nach einem der vorhergehenden Ansprüche, **dadurch gekennzeichnet, dass** die Anzahl von Pendelfederelementen (140) an einer Deckseite der Pendelmasse festgemacht sind.

5. Modul nach einem der vorhergehenden Ansprüche, **dadurch gekennzeichnet, dass** die Pendelmassenaufhängung (130) eine Pendelstange (133) aufweist, die an ihrem proximalen Ende den Gelenkkopf (131) trägt.

6. Modul nach einem der vorhergehenden Ansprüche, **dadurch gekennzeichnet, dass** die Pendelstange (133) die Pendelmasse entlang der Hängeachse (HA) durchgreift und die Pendelmasse an einer Grundseite auf einem distalen Anschlag der Pendelstange (133) aufliegt und/oder an einer Deckseite an einem Konteranschlag der Pendelstange (133) gehalten ist.

7. Modul nach einem der vorhergehenden Ansprüche, **dadurch gekennzeichnet, dass** in dem Gelenkkopf (131) ein Lagerbolzen (161) in einer Lagerbolzenaufnahme (162) gehalten ist, wobei zur Bildung des Gleitlagers die Pendelmassenaufhängung (130) drehbar gleitend am Lagerbolzen (161) gehalten ist.

8. Modul nach einem der vorhergehenden Ansprüche, **dadurch gekennzeichnet, dass** wenigstens eine Gleitfläche des Gleitlagers und/oder eines Gelenkkopfes (131) und/oder des Lagerbolzens (161) und/oder der Lagerbolzenaufnahme (162), aus Wälzlagerstahl besteht.

9. Modul nach einem der vorhergehenden Ansprüche, **dadurch gekennzeichnet, dass** das Aufhängungssystem (120) eine auf Zug einstellbare Zugkonstruktion (220) zur Bildung einer Absturzsicherung aufweist, die sich zwischen der Pendelmasse (110) und dem Tragwerk (150) erstreckt.

10. Modul nach einem der vorhergehenden Ansprüche, **dadurch gekennzeichnet, dass** das Pendelsystem (101) wenigstens ein Dämpferelement aufweist, das als Amplituden- und/oder Endlagenbegrenzer ausgebildet ist.

11. Modul nach einem der vorhergehenden Ansprüche, **dadurch gekennzeichnet, dass** das Aufhängungssystem (120) und/oder Pendelsystem (101), eine Pendeldämpfung aufweist, die ausgebildet ist, während einer freien Pendelbewegung dieselbe zu dämpfen.

12. Modul nach einem der vorhergehenden Ansprüche, **dadurch gekennzeichnet, dass** an dem Pendelsystem (101) ein aktives Stellglied angeschlossen ist, das ausgebildet ist, eine freie Pendelbewegung der Pendelmasse zu regeln aufweisend eine aktive Regelung mit einem Phasendetektor, einem Regler und einem Leistungsverstärker für die Stellgröße.

13. Schwingung reduzierende Vorrichtung, die zur hängenden Anbringung einer Anzahl von Modulen nach einem der vorhergehenden Ansprüche an einer Baueinrichtung ausgebildet ist.

14. Bausegment für eine Baueinrichtung mit einem Modul (100) nach einem der Ansprüche 1 bis 12, und/oder Turmsegment (1100) für eine Windenergieanlage (1000) mit einem Modul (100) nach einem der Ansprüche 1 bis12.

15. Windenergieanlage (1000) mit einem Turm (1001) und einer auf dem Turm (1001) angebrachten, einen Rotor (1003) tragenden Gondel (1002), wobei der Turm (1001) ein Turmsegment (1100) aufweist mit einem Modul nach einem der Ansprüche 1 bis 12.

16. Windenergieanlage (1000) nach Anspruch 15, **dadurch gekennzeichnet, dass** das Turmsegment (1100) in einem Bereich angeordnet ist, der sich zwischen 2/3 der Höhe des Turms - 20 % der Höhe bis 2/3 der Höhe des Turms +20 % der Höhe erstreckt.

## Claims

1. Vibration reducing module having
- a support structure (150),
- a pendulum system (101) having a pendulum mass (110) and having a suspension system (120) for suspending the pendulum mass (110) on the support structure (150), wherein
the suspension system has a pendulum mass suspension (130) which extends in the direction of a suspension axis and which is secured by means of a suspension head (170) to the support structure, wherein
- the suspension system (120) has a number of resilient pendulum elements (140) which extend in the direction of the suspension axis (HA) parallel with the pendulum mass suspension (130), wherein in the non-deflected state of a resilient pendulum element (140) a spring axis (FA) of the resilient pendulum element (140) extends parallel with the suspension axis (HA), and
- the suspension head (170) of the pendulum mass suspension (130) has an articulated head (131) which is secured to the support structure,
**characterised in that**
- the suspension head (170) has a pendulum bearing which is constructed as a plain bearing, and
- the resilient pendulum element (140) has a spring (141) which is configured as a pressure spring and a spring retention member which is constructed for variable adjustment of a spring length of the spring and/or for adjustment of a resilient pressure force of the spring, wherein a spring plate is spaced apart at one side of a base plate which at the other side has a carrier profile (182) which carries a variably adjustable adjustment mechanism (180) and the carrier profile (182) has a stop and an adjustment means.

2. Module according to claim 1, **characterised in that** the adjustment mechanism (180) has a guiding rod (190) with a rotary thread which engages in a threaded hole which acts as a stop, wherein the guiding rod (190) has proximally an engagement member for rotary means and distally an adjustment means which is constructed to displace the spring plate (181).

3. Module according to either of the preceding claims, **characterised in that** the number of resilient pendulum elements (140) are arranged symmetrically in terms of the rotation angle about the pendulum mass suspension (130) which is arranged centrally on the suspension axis (HA).

4. Module according to any one of the preceding claims, **characterised in that** the number of resilient pendulum elements (140) are secured to an upper side of the pendulum mass.

5. Module according to any one of the preceding claims, **characterised in that** the pendulum mass suspension (130) has a pendulum rod (133) which carries the articulated head (131) at the proximal end thereof.

6. Module according to any one of the preceding claims, **characterised in that** the pendulum rod (133) engages through the pendulum mass along the suspension axis (HA) and the pendulum mass is positioned at a lower side on a distal stop of the pendulum rod (133) and/or at an upper side on a counter-stop of the pendulum rod (133).

7. Module according to any one of the preceding claims, **characterised in that** in the articulated head (131) a bearing pin (161) is retained in a bearing pin receiving member (162), wherein in order to form the plain bearing the pendulum mass suspension (130) is retained in a rotatably sliding manner on the bearing pin (161).

8. Module according to any one of the preceding claims, **characterised in that** at least one sliding face of the plain bearing and/or an articulated head (131) and/or the bearing pin (161) and/or the bearing pin receiving member (162) comprises roller bearing steel.

9. Module according to any one of the preceding claims, **characterised in that** the suspension system (120) has a pulling construction (220) which can be adjusted in terms of tension in order to form a fall prevention means, which extends between the pendulum mass (110) and the support structure (150) .

10. Module according to any one of the preceding claims, **characterised in that** the pendulum system (101) has at least one damper element which is constructed as an amplitude and/or end bearing limiter.

11. Module according to any one of the preceding claims, **characterised in that** the suspension system (120) and/or pendulum system (101) has a pendulum damping which is constructed, during a free pendulum movement, to damp the movement.

12. Module according to any one of the preceding claims, **characterised in that** there is connected to the pendulum system (101) an active actuation member which is constructed to control a free pendulum movement of the pendulum mass having an active control having a phase detector, a controller and a power booster for the manipulated variable.

13. Vibration reducing device which is constructed for suspended fitting to a number of modules according to any one of the preceding claims to a construction device.

14. Construction segment for a construction device having a module (100) according to any one of claims 1 to 12, and/or tower segment (1100) for a wind turbine (1000) having a module (100) according to any one of claims 1 to 12.

15. Wind turbine (1000) having a tower (1001) and a pod (1002) which is fitted to the tower (1001) and which carries a rotor (1003), wherein the tower (1001) has a tower segment (1100) having a module according to any one of claims 1 to 12.

16. Wind turbine (1000) according to claim 15, **characterised in that** the tower segment (1100) is arranged in a region which extends from 2/3 of the height of the tower -20% of the height to 2/3 of the height of the tower +20% of the height.

## Revendications

1. Module de réduction de vibrations, présentant :
- une structure porteuse (150),
- un système pendulaire (101) avec une masse pendulaire (110) et avec un système de suspension (120) servant à suspendre la masse pendulaire (110) au niveau de la structure porteuse (150), dans lequel
le système de suspension présente une suspension de masse pendulaire (130) s'étendant en direction d'un axe d'accrochage, qui est fixée par l'intermédiaire d'une tête de suspension (170) à la structure porteuse, dans lequel
- le système de suspension (120) présente un nombre d'éléments de ressort pendulaire (140) s'étendant en direction de l'axe d'accrochage (HA) de manière parallèle par rapport à la suspension de masse pendulaire (130), dans lequel un axe de ressort (FA) de l'élément de ressort pendulaire (140) s'étend de manière parallèle par rapport à l'axe d'accrochage (HA) dans l'état non dévié d'un élément de ressort pendulaire (140), et
- la tête de suspension (170) de la suspension de masse pendulaire (130) présente une tête d'articulation (131), qui est fixée à la structure porteuse,
**caractérisé en ce que**
- la tête de suspension (170) présente un palier à rotule réalisé sous la forme d'un palier lisse, et
- l'élément de ressort pendulaire (140) présente un ressort (141) configuré sous la forme d'un ressort de pression et une fixation de ressort, qui est réalisée pour régler de manière variable une longueur de ressort du ressort et/ou pour régler une force de ressort de pression du ressort, dans lequel une coupelle de ressort est espacée d'un côté d'une plaque de base, qui présente d'un autre côté un profil de support (182) qui supporte un mécanisme de réglage (180) pouvant être réglé de manière variable, et le profil de support (182) présente une butée et un moyen de réglage.

2. Module selon la revendication 1, **caractérisé en ce que** le mécanisme de réglage (180) présente une tige de guidage (190) avec un filetage rotatif, qui vient en prise avec un trou fileté faisant office de butée, dans lequel la tige de guidage (190) présente de manière proximale un engagement pour des moyens de rotation et distalement un moyen de réglage, qui est réalisé pour décaler la coupelle de ressort (181).

3. Module selon l'une quelconque des revendications précédentes, **caractérisé en ce que** le nombre d'éléments de ressort pendulaire (140) sont disposés de manière symétrique par rapport à un angle de rotation autour de la suspension de masse pendulaire (130) disposée de manière centrale sur l'axe d'accrochage (HA).

4. Module selon l'une quelconque des revendications précédentes, **caractérisé en ce que** le nombre d'éléments de ressort pendulaire (140) sont attachés au niveau d'un côté de recouvrement de la masse pendulaire.

5. Module selon l'une quelconque des revendications précédentes, **caractérisé en ce que** la suspension de masse pendulaire (130) présente une tige pendulaire (133), qui supporte au niveau de son extrémité proximale la tête d'articulation (131).

6. Module selon l'une quelconque des revendications précédentes, **caractérisé en ce que** la tige pendulaire (133) traverse la masse pendulaire le long de l'axe d'accrochage (HA) et la masse pendulaire repose au niveau d'un côté de base sur une butée distale de la tige pendulaire (133) et/ou est maintenue au niveau d'un côté de recouvrement au niveau d'une contre-butée de la tige pendulaire (133).

7. Module selon l'une quelconque des revendications précédentes, **caractérisé en ce qu'**un boulon de palier (161) est maintenu dans un logement de boulon de palier (162) dans la tête d'articulation (131), dans lequel la suspension de masse pendulaire (130) est maintenue de manière à glisser en rotation au niveau du boulon de palier (161) pour former le palier lisse.

8. Module selon l'une quelconque des revendications précédentes, **caractérisé en ce qu'**au moins une surface de glissement du palier lisse et/ou d'une tête d'articulation (131) et/ou du boulon de palier (161) et/ou du logement de boulon de palier (162) est constituée d'acier de palier à roulement.

9. Module selon l'une quelconque des revendications précédentes, **caractérisé en ce que** le système de suspension (120) présente une structure de traction (220) à traction réglable servant à former un système de sécurité antichute, qui s'étend entre la masse pendulaire (110) et la structure porteuse (150).

10. Module selon l'une quelconque des revendications précédentes, **caractérisé en ce que** le système pendulaire (101) présente au moins un élément amortisseur, qui est réalisé sous la forme d'un limiteur d'amplitude et/ou de position finale.

11. Module selon l'une quelconque des revendications précédentes, **caractérisé en ce que** le système de suspension (120) et/ou le système pendulaire (101) présentent un amortissement pendulaire, qui est réalisé pour amortir pendant un déplacement modulaire libre celui-ci.

12. Module selon l'une quelconque des revendications précédentes, **caractérisé en ce qu'**est raccordé au système pendulaire (101) un organe de réglage actif, qui est réalisé pour réguler un déplacement pendulaire libre de la masse pendulaire et qui comporte un système de régulation actif avec un détecteur de phases, un régulateur et un amplificateur de puissance pour la grandeur de réglage.

13. Dispositif de réduction d'oscillation, qui est réalisé pour installer par accrochage un nombre de modules selon l'une quelconque des revendications précédentes, au niveau d'un système de construction.

14. Segment de construction pour un système de construction avec un module (100) selon l'une quelconque des revendications 1 à 12, et/ou segment de tour (1100) pour une éolienne (1000) avec un module (100) selon l'une quelconque des revendications 1 à 12.

15. Eolienne (1000) avec une tour (1001) et une nacelle (1002) installée sur la tour (1001), supportant un rotor (1003), dans laquelle la tour (1001) présente un segment de tour (1100) avec un module selon l'une quelconque des revendications 1 à 12.

16. Eolienne (1000) selon la revendication 15, **caractérisée en ce que** le segment de tour (1100) est disposé dans une zone, qui s'étend entre 2/3 de la hauteur de la tour -20 % de la hauteur à 2/3 de la hauteur de la tour +20 % de la hauteur.
